(19) Europäisches Patentamt / European Patent Office / Office européen des brevets

(11) **EP 1 868 104 A1**

(12) **EUROPEAN PATENT APPLICATION**
published in accordance with Art. 158(3) EPC

(43) Date of publication:
**19.12.2007 Bulletin 2007/51**

(51) Int Cl.:
*G06F 13/00* (2006.01)

(21) Application number: **05805936.1**

(22) Date of filing: **14.11.2005**

(86) International application number:
**PCT/JP2005/020876**

(87) International publication number:
**WO 2006/103801 (05.10.2006 Gazette 2006/40)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **29.03.2005 JP 2005095639**

(71) Applicants:
• **Brother Kogyo Kabushiki Kaisha**
  **Nagoya-shi, Aichi 467-8561 (JP)**
• **Xing Inc.**
  **Nagoya-shi, Aichi 4670851 (JP)**

(72) Inventors:
• **USHIYAMA, Kentaro**
  **c/o Brother Kogyo Kabushiki Kais**
  **Aichi 467-8561 (JP)**
• **HIBINO, Yoshihiko**
  **c/o Brother Kogyo Kabushiki Kais**
  **Aichi 467-8561 (JP)**
• **KIYOHARA, Yuji**
  **c/o Brother Kogyo Kabushiki Kaisha**
  **Nagoya-shi Aichi467 -8561 (JP)**

• **SUZUKI, Hiroaki**
  **c/o Brother Kogyo Kabushiki Kaisha**
  **Aichi 467-8561 (JP)**
• **IIJIMA, Koichi**
  **c/o Xing Inc.**
  **Aichi 467-0851 (JP)**
• **KUDO, Tomohiro**
  **c/o National Institute of Advanced**
  **Tsukuba-shi, Ibaraki 305-0046 (JP)**
• **TATEBE, Osamu**
  **c/o National Institute of Advanced I**
  **Tsukuba-shi, Ibaraki 305-0046 (JP)**
• **KODAMA, Yuetsu**
  **c/o National Institute of Advanced**
  **-chome Tsukuba-shi, Ibaraki 305-0046 (JP)**
• **SHUDO, Kazuyuki**
  **c/o National Institute of Advanced**
  **Tsukuba-shi, Ibaraki 305-0046 (JP)**

(74) Representative: **Smith, Samuel Leonard et al**
  **J.A. Kemp & Co.,**
  **14 South Square,**
  **Gray's Inn**
  **London WC1R 5JJ (GB)**

(54) **INFORMATION PROCESSING DEVICE, INFORMATION PROCESSING METHOD, AND INFORMATION PROCESSING PROGRAM**

(57)    The present invention enables replicas of the necessary number in a distribution system to be disposed autonomously in proper positions in the distribution system without providing a server or the like and enables necessary content to be distributed more efficiently.

One or plural pieces of content is/are recorded in nodes N1 to N4 as components of a distribution system in which content C1 to C4 to be distributed are directly transmitted/received among the nodes N via a network. An evaluation value having a value based on at least the number of distribution requests is generated and stored for each piece of the content C1 to C4.

FIG.6A

EP 1 868 104 A1

# FIG.6B

N1 | C1 | N2 | N3 | N4

| | |
|---|---|
| (3)→(4) | C1 |
| (1) | C2 |

| | |
|---|---|
| (0) | C2 |
| (1) | C3 |

| | |
|---|---|
| (1) | C3 |
| (0) | C4 |

| | |
|---|---|
| (1) | C4 |
| (3) | C1 |

# FIG.6C

N1 | (C1,W) | N2 | N3 | N4

| | |
|---|---|
| (4) | C1 |
| (1) | C2 |

| | |
|---|---|
| (2) | C2 |
| (1) | C3 |

| | |
|---|---|
| (1) | C3 |
| (0) | C4 |

| | |
|---|---|
| (1) | C4 |
| (3) | C1 |

# FIG.6D

N1 | N2 | N3 | N4

| | |
|---|---|
| (2) | C1 |
| (1) | C2 |

| | |
|---|---|
| (2) | C2 |
| (1) | C3 |

| | |
|---|---|
| (1) | C3 |
| (0) | C4 |

| | |
|---|---|
| (1) | C4 |
| (3) | C1 |

**Description**

TECHNICAL FIELD

The present invention belongs to the technical field of an information processing apparatus, an information processing method, and an information processing program. More specifically, the invention belongs to the technical field of an information processing apparatus and an information processing method for distributing content (distribution information) such as a movie to be distributed via a network, and an information processing program for performing the distributing process.

BACKGROUND ART

In recent years, a distribution system for performing so-called content distribution is being actively studied and developed. The content distribution is performed by accessing a server or the like storing the content from a terminal device via a network such as the Internet, and distributing content desired to be viewed in the terminal device to the terminal device so that a user can view the content.

One of the distribution systems is a P2P (pear-to-pear) distribution system as a distribution system in which the content is directly transmitted/received among terminal devices belonging to a network (in other words, a distribution system in which content is distributed and shared among a plurality of terminal devices). Attention is paid to the P2P distribution system as a technique for solving access concentration on a server and high management cost as drawbacks of a conventional client-server model.

In the study of the field, as one of the P2P distribution systems, a "distribution storage system" is proposed as a technique for increasing fault tolerance and distributability by preparing a plurality of replicas for one piece of content and dispersing the replicas to a plurality of terminal devices.

An example of the conventional proposals of generation and disposition of the replica is the technique disclosed in Patent Document 1.

Patent Document 1: Japanese Patent Application Laid-Open No. 2003-99337.

The publication proposes a method of generating and disposing replicas uniformly in an entire network in a service group by referring to the entire size (general information amount) of replicas existing in terminal devices connected in the service group on the network and the number of replicas.

Disclosure of Invention

Problems to be solved by the Invention

A service mode in which the frequency of accesses to registered content from terminal devices largely varies among the content has a problem such that accesses from other terminal devices are concentrated on a terminal device which records frequently-accessed content. With respect to content which is frequently accessed from other terminal devices, it is inherently desirable to generate replicas of the number according to the popularity. In the technique disclosed in the above-described Patent Document 1, however, the popularity of content is not considered.

To obtain the optimum number of replicas according to the access frequencies, it is necessary to obtain the storage capacity of the whole distributed storage system and access frequencies of all of content registered in the distribution system and, on the basis of the obtained storage capacity and the access frequencies, assign recording capacity proportional to the access frequency to each piece of the content. Realization of the assignment in the P2P distribution system, however, has a problem. A server for managing the locations of content and the number of pieces of content in the whole distribution system is separately required. As a result, accesses are concentrated on the server and the cost increases, so that the advantages of the P2P distribution system are lost.

The present invention has been achieved in view of the problems. An object of the invention is to provide an information processing apparatus and an information processing method capable of autonomously disposing replicas of the necessary number in a distribution system to proper positions in the distribution system without providing a server or the like for managing the locations and the number of content and capable of distributing necessary content more efficiently, and to provide an information processing program for performing the distributing process.

Means for solving the Problems

In order to the above problems, the invention according to claim 1 relates to an information processing apparatus as a component of an information distribution system in which distribution information to be distributed is directly transmitted/received among information processing apparatuses via a network, comprising:

recording means for recording one or plural pieces of the distribution information; and

evaluation information storing means for generating and storing evaluation information having a value based on at least the number of distribution requests for each piece of the distribution information.

Therefore, since evaluation information having a value based on at least the number of distribution requests is stored for each piece of the distribution information, the number of replicas of the distribution information in a network and the like can be controlled in accordance with the evaluation information.

In order to the above problems, the invention according to claim 2 relates to the information processing apparatus according to claim 1,

further comprising evaluation information updating means for, each time distribution of any of the distribution information recorded in the recording means is requested by another one of the information processing apparatuses on the network, increasing the value of the evaluation information corresponding to the requested distribution information.

Therefore, since the value of evaluation information increases each time a distribution request is made, the actual number of distribution requests., that is, the value of the evaluation information corresponding to actual popularity of the distribution information in users of the information processing apparatuses in the network is accurately reflected. Thus, the replicas can be disposed properly in the network in accordance with the actual popularity.

In order to the above problems, the invention according to claim 3 relates to the information processing apparatus according to claim 1 or 2,

wherein in the case where any piece of the distribution information recorded in the recording means is transmitted to the another information processing apparatus in correspondence with transmission request information from the another information processing apparatus on the network, when replica generation information indicating that a replica of the transmitted distribution information is generated in the another information processing apparatus is transmitted from the another information processing apparatus together with a replica factor corresponding to the distribution information whose replica has been generated, the evaluation information storing means stores, as a new value of the evaluation information corresponding to the distributed distribution information, a value obtained by multiplying the value of the evaluation information corresponding to the distribution information at the time point when the distribution information is distributed to the another information processing apparatus with the transmitted replica factor, and

the replica factor has a value less than 1 corresponding to distance on the network between the information processing apparatus having the evaluation information storing means and the another information processing apparatus which has transmitted the replica generation information.

Therefore, a value obtained by multiplying the value of the evaluation information corresponding to the distributed distribution information with a replica factor transmitted from the distribution destination when a replica of the distribution information is generated in the distribution destination is set as a new value of the evaluation information corresponding to the distribution information, and the replica factor has a value less than 1 corresponding to distance on the network to the information processing apparatus as the distribution destination. Consequently, when a replica of the distributed distribution information is generated in the information processing apparatus as the distribution destination, the evaluation information can be properly updated in relation with the distance on the network to the information processing apparatus in which a replica is generated and the replica itself.

In order to the above problems, the invention according to claim 4 relates to the information processing apparatus according to any one of claims 1 to 3,

further comprising evaluation information updating means for decreasing the value of each piece of the evaluation information each time preset time elapses.

Therefore, since the value of the evaluation information corresponding to each piece of the distribution information decreases each time preset time elapses, the evaluation information can be updated without making the difference between distribution information frequently requested to be distributed and the other distribution information excessive.

In order to the above problems, the invention according to claim 5 relates to the information processing apparatus according to any one of claims 1 to 4, further comprising:

retrieving means for, when the distribution information requested to be distributed is not recorded in the recording means, retrieving another information processing apparatus having the recording means in which the distribution information as an object of the distribution request is recorded on the network;

transmitting means for transmitting transmission request information indicative of a request to the retrieved another information processing apparatus to transfer the distribution information; and

obtaining means for obtaining the distribution information corresponding to the transmission request information as a replica of the distribution information from the retrieved another information processing apparatus together with the evaluation information corresponding to the distribution information,

wherein, when the distribution information is obtained from the retrieved another information processing apparatus, the evaluation information storing means stores, as a new value of the evaluation information corresponding to the distributed distribution information, a value obtained by multiplying the value of the evaluation information obtained together with the distribution information with a replica factor corresponding to the obtained distribution information, and the replica factor has a value less than 1 corresponding to distance on the network between the retrieved another information processing apparatus and the information processing apparatus having the evaluation information storing means.

Therefore, when distribution information requested to be distributed is not recorded, another information processing apparatus in which the distribution information is recorded is retrieved. Information of a request to transmission the distribution information is transmitted to the retrieved another information processing apparatus. Distribution information corresponding to the transmission request information is obtained as a replica of the distribution information together with the evaluation information corresponding to the distribution information. Further, when the distribution information is obtained, a value obtained by multiplying the value of the evaluation information corresponding to the distribution information with a replica factor corresponding to the obtained distribution information is stored as a new value of the corresponding evaluation information. Also, the replica factor has a value less than 1 corresponding to distance on the network to the another information processing apparatus. Accordingly, when new distribution information is obtained as a replica, evaluation information can be properly updated in the relation with the distance on the network to the information processing apparatus as the distribution source and the obtained distribution information itself.

In order to the above problems, the invention according to claim 6 relates to the information processing apparatus according to claim 5,

further comprising replica generation information transmitting means for,when the distribution information obtained from the retrieved another information processing apparatus is recorded as a replica in the recording means, transmitting replica generation information indicating that the distribution information is recorded as a replica in the recording means together with the replica factor corresponding to the recorded distribution information to the retrieved another information processing apparatus.

Therefore, when a replica of the distribution information is recorded in the information processing apparatus which has received the distribution request, replica generation information indicative of the fact is transmitted together with a replica factor to the distribution source of the distribution information. Thus, the value of the evaluation information corresponding to the distribution information recorded in the information processing apparatus as the distribution source can be properly updated in the relation with the replica.

In order to the above problems, the invention according to claim 7 relates to the information processing apparatus according to claim 5 or 6,

further comprising designating means for designating, as deletion distribution information to be deleted from the recording means, the distribution information corresponding to deletion evaluation information as the evaluation information having a value smaller than the stored new value,

wherein, when free recording space in the recording means becomes equal to or less than the information amount of the another distribution information to be received next, the distribution information designated as the deletion distribution information is deleted from the recording means.

Therefore, the distribution information corresponding to deletion evaluation information is designated as deletion distribution information to be deleted. When free recording space in the recording means becomes equal to or less than the information amount of the another distribution information to be received next, the distribution information designated as the deletion distribution information is actually deleted from the recording means. Thus, in relation with another distribution information to be received next, distribution information which becomes unnecessary can be deleted in proper time, and new distribution information can be efficiently received.

In order to the above problems, the invention according to claim 8 relates to the information processing apparatus according to claim 7,

wherein the designating means comprises recognizing means for recognizing whether or not a replica of the distribution information corresponding to the deletion evaluation information exists in any of the information processing apparatuses on the network, and

except for the case where it is recognized that the replica exists in any of the information processing apparatuses on the network, the distribution information corresponding to the deletion evaluation information is excluded from objects to be designated as the deletion distribution information.

Therefore, a check is made to see whether or not a replica of the distribution information corresponding to the deletion evaluation information exists in any of the information processing apparatuses on the network. Except for the case where it is recognized that the replica exists in any of the information processing apparatuses on the network, the distribution information corresponding to the deletion evaluation information is excluded from objects to be designated as the deletion distribution information. As a result, when the replica does not exist in any of the information processing apparatuses on the network, the distribution information corresponding to the deletion evaluation information is not deleted. Therefore, the distribution information can be prevented from disappearing from the network.

In order to the above problems, the invention according to claim 9 relates to the information processing apparatus according to claim 8,
wherein, when a replica of the distribution information corresponding to the deletion evaluation information exists in any of the information processing apparatuses in a preset search range on the network, including the information processing apparatus, the recognizing means recognizes that a replica of the distribution information corresponding to the deletion evaluation information exists in any of the information processing apparatuses on the network.

Therefore, when a replica of the distribution information corresponding to the deletion evaluation information exists in any of the information processing apparatuses in a preset search range on the network, it is recognized that a replica of the distribution information corresponding to the deletion evaluation information exists in any of the information processing apparatuses on the network. Consequently, by excluding an information processing apparatus on the outside of the search range from the range in which the existence of distribution information is recognized, necessary distribution information can be retrieved promptly.

In order to the above problems, the invention according to claim 10 relates to the information processing apparatus according to any one of claims 3 and 5 to 9,
wherein it is preset so that the longer the distance, the larger the value of the replica factor.

It is set so that the longer the distance on the network, the larger the value of the replica factor.
Consequently, generation of a distribution request from an information processing apparatus in a far place on the network can be suppressed to some extent.
Distribution information which is frequently requested by the information processing apparatuses in a certain range on the network can be efficiently distributed to the information processing apparatuses in the range and recorded.

In order to the above problems, the invention according to claim 11 relates to an information processing method executed in an information processing apparatus as a component of an information distribution system in which distribution information to be distributed is directly transmitted/received among information processing apparatuses via a network, the information processing apparatus including recording means and evaluation information storing means,
the method comprising:

a recording step for recording one or plural pieces of the distribution information in the recording means; and

an evaluation information storing step for generating evaluation information having a value based on at least the number of distribution requests for each piece of the distribution information and storing the evaluation information into the evaluation information storing means.

Therefore, since evaluation information having a value based on at least the number of distribution requests is stored for each piece of the distribution information, the number of replicas of the distribution information in the network and the like can be controlled according to the evaluation information.

In order to the above problems, the invention according to claim 12 relates to an information processing program for causing a computer to function as the information processing apparatus according to any one of claims 1 to 10.

Therefore, in the case where the computer functions as the information processing apparatus according to claim 1, evaluation information having a value based on at least the number of distribution requests is stored for each piece of the distribution information. Thus, the number of replicas of the distribution information in the network and the like can be controlled according to the evaluation information.

In the case where the computer functions as the information processing apparatus according to claim 2, in addition to the case where the computer functions as the information processing apparatus according to claim 1, the value of the evaluation information increases each time a distribution request is made. Consequently, the actual number of distribution requests, that is, the value of the evaluation information corresponding to actual popularity of the distribution information in users of the information processing apparatuses in the network is accurately reflected. Thus, the replicas can be disposed properly in the network in accordance with the actual popularity.

Further, in the case where the computer functions as the information processing apparatus according to claim 3, in addition to the case where the computer functions as the information processing apparatus according to claim 1 or 2, a value obtained by multiplying the value of the evaluation information corresponding to the distributed distribution information with a replica factor transmitted from the distribution destination when a replica of the distribution information is generated in the distribution destination is set as a new value of the evaluation information corresponding to the distribution information, and the replica factor has a value less than 1 corresponding to distance on the network to the information processing apparatus as the distribution destination. Consequently, when a replica of the distributed distribution information is generated in the information processing apparatus as the distribution destination, the evaluation information can be properly updated in relation with the distance on the network to the information processing apparatus in which a replica is generated and the replica itself.

Further, in the case where the computer functions as the information processing apparatus according to claim 4, in addition to the case where the computer functions as the information processing apparatus according to any one of claims 1 to 3, the value of the evaluation information corresponding to each piece of distribution information decreases each time preset time elapses. Thus, the evaluation information can be updated without making the difference between distribution information frequently requested to be distributed and the other distribution information excessive.

Further, in the case where the computer functions as the information processing apparatus according to claim. 5, in addition to the case where the computer functions as the information processing apparatus according to any one of claims 1 to 4, when distribution information requested to be distributed is not recorded, another information processing apparatus in which the distribution information is recorded is retrieved. Information of a request to transmission the distribution information is transmitted to the retrieved another information processing apparatus. Distribution information corresponding to the transmission request information is obtained as a replica of the distribution information together with the evaluation information corresponding to the distribution information. Further, when the distribution information is obtained, a value obtained by multiplying the value of the evaluation information corresponding to the distribution information with a replica factor corresponding to the obtained distribution information is stored as a new value of the corresponding evaluation information. In addition, the replica factor has a value less than 1 corresponding to distance on the network to the another information processing apparatus. Accordingly, when new distribution information is obtained as a replica, evaluation information can be properly updated in the relation with the distance on the network to the information processing apparatus as the distribution source and the obtained distribution information itself.

Further, in the case where the computer functions as the information processing apparatus according to claim 6, in addition to the case where the computer functions as the information processing apparatus according to claim 5, when a replica of the distribution information is recorded in the information processing apparatus which has received the distribution request, replica generation information indicative of the fact is transmitted together with a replica factor to the distribution source of the distribution information. Thus, the value of the evaluation information corresponding to the distribution information recorded in the information processing apparatus as the distribution source can be properly updated in the relation with the replica.

Further, in the case where the computer functions as the information processing apparatus according to claim 7, in addition to the case where the computer functions as the information processing apparatus according to claim 5 or 6, the distribution information corresponding to deletion evaluation information is designated as deletion distribution information to be deleted. When free recording space in the recording means becomes equal to or less than the information amount of the another distribution information to be received next, the distribution information designated as the deletion distribution information is deleted actually from the recording means. Thus, in relation with another distribution information to be received next, distribution information which becomes unnecessary can be deleted in proper time, and new distribution information can be efficiently received.

Further, in the case where the computer functions as the information processing apparatus according to claim 8, in addition to the case where the computer functions as the information processing apparatus according to claim 7, a check is made to see whether or not a replica of the distribution information corresponding to the deletion evaluation information exists in any of the information processing apparatuses on the network. Except for the case where it is recognized that the replica exists in any of the information processing apparatuses on the network, the distribution information corresponding to the deletion evaluation information is excluded from objects to be designated as the deletion distribution information. As a result, when the replica does not exist in any of the information processing apparatuses on the network, the distribution information corresponding to the deletion evaluation information is not deleted. Therefore, the distribution information can be prevented from disappearing from the network.

Further, in the case where the computer functions as the information processing apparatus according to claim 9, in addition to the case where the computer functions as the information processing apparatus according to claim 8, when a replica of the distribution information corresponding to the deletion evaluation information exists in any of the information processing apparatuses in a preset search range on the network, it is recognized that a replica of the distribution information corresponding to the deletion evaluation information exists in any of the information processing apparatuses on the network. Consequently, by excluding an information processing apparatus on the outside of the search range from the range in which the existence of distribution information is recognized, necessary distribution information can be retrieved promptly.

Further, in the case where the computer functions as the information processing apparatus according to claim 10, in addition to the case where the computer functions as the information processing apparatus according to any one of claims 3 and 5 to 9, it is set so that the longer the distance on the network, the larger the value of the replica factor. Consequently, generation of a distribution request from an information processing apparatus in a far place on the network can be suppressed to some extent. Distribution information which is frequently requested by the information processing apparatuses in a certain range on the network can be efficiently distributed to the information processing apparatuses in the range and recorded.

In order to the above problems, the invention according to claim 13 relates to a recording medium in which the information processing program according to claim 12 is recorded so as to be readable by the computer.

Therefore, in the case where an information processing program for causing a computer to function as the information processing apparatus according to claim 1 is recorded, the program is read and executed in the computer, so that evaluation information having a value based on at least the number of distribution requests is stored for each piece of the distribution information. Consequently, the number of replicas of the distribution information in the network and the like can be controlled according to the evaluation information.

In the case where an information processing program for causing a computer to function as the information processing apparatus according to claim 2 is recorded, by reading and executing the program in the computer, in addition to the case where the computer functions as the information processing apparatus according to claim 1, the value of the evaluation information increases each time a distribution request is made. Consequently, the actual number of distribution requests, that is, the value of the evaluation information corresponding to actual popularity of the distribution information in users of the information processing apparatuses in the network is accurately reflected. Thus, the replicas can be disposed properly in the network in accordance with the actual popularity.

Further, in the case where an information processing program for causing a computer to function as the information processing apparatus according to claim 3 is recorded, by reading and executing the program in the computer, in addition to the case where the computer functions as the information processing apparatus according to claim 1 or 2, a value obtained by multiplying the value of the evaluation information corresponding to the distributed distribution information with a replica factor transmitted from the distribution destination when a replica of the distribution information is generated in the distribution destination is set as a new value. of the evaluation information corresponding to the distribution information, and the replica factor has a value less than 1 corresponding to distance on the network to the information processing apparatus as the distribution destination. Consequently, when a replica of the distributed distribution information is generated in the information processing apparatus as the distribution destination, the evaluation information can be properly updated in relation with the distance on the network to the information processing apparatus in which a replica is generated and the replica itself.

Further, in the case where an information processing program for causing a computer to function as the information processing apparatus according to claim 4 is recorded, by reading and executing the program in the computer, in addition to the case where the computer functions as the information processing apparatus according to any one of claims 1 to 3, the value of the evaluation information corresponding to each piece of distribution information decreases each time preset time elapses. Consequently, the evaluation information can be updated without making the difference between distribution information frequently requested to be distributed and the other distribution information excessive.

Further, in the case where an information processing program for causing a computer to function as the information processing apparatus according to claim 5 is recorded, by reading and executing the program in the computer, in addition to the case where the computer functions as the information processing apparatus according to any one of claims 1 to 4, when distribution information requested to be distributed is not recorded, another information processing apparatus in which the distribution information is recorded is retrieved. Information of a request to transmission the distribution information is transmitted to the retrieved another information processing apparatus. Distribution information corresponding to the transmission request information is obtained as a replica of the distribution information together with the evaluation information corresponding to the distribution information. Further, when the distribution information is obtained, a value obtained by multiplying the value of the evaluation information corresponding to the distribution information with a replica factor corresponding to the obtained distribution information is stored as a new value of the corresponding evaluation information. In addition, the replica factor has a value less than 1 corresponding to distance on the network to the another information processing apparatus. Thus, when new distribution information is obtained as a replica, evaluation information can be properly updated in the relation with the distance on the network to the information processing apparatus as the distribution source and the obtained distribution information itself.

Further, in the case where an information processing program for causing a computer to function as the information processing apparatus according to claim 6 is recorded, by reading and executing the program in the computer, in addition to the case where the computer functions as the information processing apparatus according to claim 5, when a replica of the distribution information is recorded in the information processing apparatus which has received the distribution request, replica generation information indicative of the fact is transmitted together with a replica factor to the distribution source of the distribution information. Thus, the value of the evaluation information corresponding to the distribution information recorded in the information processing apparatus as the distribution source can be properly updated in the relation with the replica.

Further, in the case where an information processing program for causing a computer to function as the information processing apparatus according to claim 7 is recorded, by reading and executing the program in the computer, in addition to the case where the computer functions as the information processing apparatus according to claim 5 or 6, the distribution information corresponding to deletion evaluation information is designated as deletion distribution information to be deleted. When free recording space in the recording means becomes equal to or less than the information amount of the another distribution information to be received next, the distribution information designated as the deletion distribution information is actually deleted from the recording means. Thus, in relation with another distribution information to be received next, distribution information which becomes unnecessary can be deleted in proper time, and new distribution information can be efficiently received.

Further, in the case where an information processing program for causing a computer to function as the information processing apparatus according to claim 8 is recorded, by reading and executing the program in the computer, in addition to the case where the computer functions as the information processing apparatus according to claim 7, a check is made to see whether or not a replica of the distribution information corresponding to the deletion evaluation information exists in any of the information processing apparatuses on the network. Except for the case where it is recognized that the replica exists in any of the information processing apparatuses on the network, the distribution information corresponding to the deletion evaluation information is excluded from objects to be designated as the deletion distribution information. As a result, when the replica does not exist in any of the information processing apparatuses on the network, the distribution information corresponding to the deletion evaluation information is not deleted. Therefore, the distribution information can be prevented from disappearing from the network.

Further, in the case where an information processing program for causing a computer to function as the information processing apparatus according to claim 9 is recorded, by reading and executing the program in the computer, in addition to the case where the computer functions as the information processing apparatus according to claim 8, when a replica of the distribution information corresponding to the deletion evaluation information exists in any of the information processing apparatuses in a preset search range on the network, it is recognized that a replica of the distribution information corresponding to the deletion evaluation information exists in any of the information processing apparatuses on the network. Consequently, by excluding an information processing apparatus on the outside of the search range from the range in which the existence of distribution information is recognized, necessary distribution information can be retrieved promptly.

Further, in the case where an information processing program for causing a computer to function as the information processing apparatus according to claim 10 is recorded, by reading and executing the program in the computer, in addition to the case where the computer functions as the information processing apparatus according to any one of claims 3 and 5 to 9, it is set so that the longer the distance on the network, the larger the value of the replica factor. Consequently, generation of a distribution request from an information processing apparatus in a far place on the network can be suppressed to some extent. Distribution information which is frequently requested by the information processing apparatuses in a certain range on the network can be efficiently distributed to the information processing apparatuses in the range and recorded.

Effects of the Invention

As described above, according to the invention of claim 1, evaluation value having a value based on at least the number of distribution requests is stored for each piece of the distribution information. Consequently, the number of replicas of the distribution information in a network and the like can be controlled in accordance with the evaluation information.

Therefore, by controlling the number of replicas of distribution information in a network and designation of an information processing apparatus to store the replicas on the basis of the evaluation information, replicas of the necessary number in the network can be disposed autonomously in proper positions in the network, and necessary distribution information can be distributed more efficiently.

According to the invention of claim 2, in addition to the effect of the invention of claim 1, since the value of evaluation information increases each time a distribution request is made, the actual number of distribution requests, that is, the value of the evaluation information corresponding to actual popularity of the distribution information in users of the information processing apparatuses in the network is accurately reflected. Thus, the replicas can be disposed properly in the network in accordance with the actual popularity.

According to the invention of claim 3, in addition to the effect of the invention of claim 1 or 2, a value obtained by multiplying the value of the evaluation information corresponding to the distributed distribution information with a replica factor transmitted from the distribution destination when a replica of the distribution information is generated in the distribution destination is set as a new value of the evaluation information corresponding to the distribution information, and the replica factor has a value less than 1 corresponding to distance on the network to the information processing apparatus as the distribution destination. Consequently, when a replica of the distributed distribution information is generated in the information processing apparatus as the distribution destination, the evaluation information can be properly updated in relation with the distance on the network to the information processing apparatus in which a replica is generated and the replica itself.

According to the invention of claim 4, in addition to the effect of the invention of any of claims 1 to 3, the value of the evaluation information corresponding to each piece of distribution information decreases each time preset time elapses. Therefore, the evaluation information can be updated without making the difference between distribution information frequently requested to be distributed and the other distribution information excessive.

According to the invention of claim 5, in addition to the effect of the invention of any of claims 1 to 4, when distribution information requested to be distributed is not recorded, another information processing apparatus in which the distribution information is recorded is retrieved. Information of a request to transmission the distribution information is transmitted to the retrieved another information processing apparatus. Distribution information corresponding to the transmission request information is obtained as a replica of the distribution information together with the evaluation information correspondingtothedistributioninformation. Further, when the distribution information is obtained, a value obtained by multiplying the value of the evaluation information corresponding to the distribution information with a replica factor corresponding to the obtained distribution information is stored as a new value of the corresponding evaluation information. In addition, the replica factor has a value less than 1 corresponding to distance on the network to the another information processing apparatus. Accordingly, when new distribution information is obtained as a replica, evaluation information can be properly updated in the relation with the distance on the network to the information processing apparatus as the distribution source and the obtained distribution information itself.

According to the invention of claim 6, in addition to the effect of the invention of claim 5, when a replica of the distribution information is recorded in the information processing apparatus which has received the distribution request, replica generation information indicative of the fact is transmitted together with a replica factor to the distribution source of the distribution information. Thus, the value of the evaluation information corresponding to the distribution information recorded in the information processing apparatus as the distribution source can be properly updated in the relation with the replica.

According to the invention of claim 7, in addition to the effect of the invention of claim 5 or 6, the distribution information corresponding to deletion evaluation information is designated as deletion distribution information to be deleted. When free recording space in the recording means becomes equal to or less than the information amount of the another distribution information to be received next, the distribution information designated as the deletion distribution information is actually deleted from the recording means. Thus, in relation with another distribution information to be received next, distribution information which becomes unnecessary can be deleted in proper time, and new distribution information can be efficiently received.

According to the invention of claim 8, in addition to the effect of the invention of claim 7, a check is made to see whether or not a replica of the distribution information corresponding to the deletion evaluation information exists in any of the information processing apparatuses on the network. Except for the case where it is recognized that the replica exists in any of the information processing apparatuses on the network, the distribution information corresponding to the deletion evaluation information is excluded from objects to be designated as the deletion distribution information. As a result, when the replica does not exist in any of the information processing apparatuses on the network, the distribution information corresponding to the deletion evaluation information is not deleted. Therefore, the distribution information can be prevented from disappearing from the network.

According to the invention of claim 9, in addition to the effect of the invention of claim 8, when a replica of the distribution information corresponding to the deletion evaluation information exists in any of the information processing apparatuses in a preset search range on the network, it is recognized that a replica of the distribution information corresponding to the deletion evaluation information exists in any of the information processing apparatuses on the network. Consequently, by excluding an information processing apparatus on the outside of the search range from the range in which the existence of distribution information is recognized, necessary distribution information can be retrieved promptly.

According to the invention of claim 10, in addition to the effect of the invention of any of claims 3 and 5 to 9, it is set so that the longer the distance on the network, the larger the value of the replica factor. Consequently, generation of a distribution request from an information processing apparatus in a far place on the network can be suppressed to some extent. Distribution information which is frequently requested by the information processing apparatuses in a certain range on the network can be efficiently distributed to the information processing apparatuses in the range and recorded.

According to the invention of claim 11, evaluation information having a value based on at least the number of distribution requests is stored for each of the distribution information. Thus, the number of replicas of the distribution information in the network and the like can be controlled according to the evaluation information.

Therefore, by controlling the number of replicas of distribution information in a network and designation of an information processing apparatus to store the replicas on the basis of the evaluation information, replicas of the necessary number in the network can be disposed autonomously in proper positions in the network, and necessary distribution information can be distributed more efficiently.

According to the invention of claim 12, in the case where the computer functions as the information processing apparatus according to claim 1, evaluation information having a value based on at least the number of distribution requests is stored for each piece of the distribution information. Thus, the number of replicas of the distribution information in the network and the like can be controlled according to the evaluation information.

Therefore, by controlling the number of replicas of distribution information in a network and designation of an information processing apparatus to store the replicas on the basis of the evaluation value, replicas of the necessary number in the network can be disposed autonomously in proper positions in the network, and necessary distribution information can be distributed more efficiently.

In the case where the computer functions as the information processing apparatus according to claim 2, in addition to the case where the computer functions as the information processing apparatus according to claim 1, the value of the evaluation information increases each time a distribution request is made. Consequently, the actual number of distribution requests, that is, the value of the evaluation information corresponding to actual popularity of the distribution information in users of the information processing apparatuses in the network is accurately reflected. Thus, the replicas can be disposed properly in the network in accordance with the actual popularity.

Further, in the case where the computer functions as the information processing apparatus according to claim 3, in addition to the case where the computer functions as the information processing apparatus according to claim 1 or 2, a value obtained by multiplying the value of the evaluation information corresponding to the distributed distribution information with a replica factor transmitted from the distribution destination when a replica of the distribution information is generated in the distribution destination is set as a new value of the evaluation information corresponding to the distribution information, and the replica factor has a value less than 1 corresponding to distance on the network to the information processing apparatus as the distribution destination. Consequently, when a replica of the distributed distribution information is generated in the information processing apparatus as the distribution destination, the evaluation information can be properly updated in relation with the distance on the network to the information processing apparatus in which a replica is generated and the replica itself..

Further, in the case where the computer functions as the information processing apparatus according to claim 4, in addition to the case where the computer functions as the information processing apparatus according to any one of claims 1 to 3, the value of the evaluation information corresponding to each piece of distribution information decreases each time preset time elapses. Therefore, the evaluation information can be updated without making the difference between distribution information frequently requested to be distributed and the other distribution information excessive.

Further, in the case where the computer functions as the information processing apparatus according to claim 5, in addition to the case where the computer functions as the information processing apparatus according to any one of claims 1 to 4, when distribution information requested to be distributed is not recorded, another information processing apparatus in which the distribution information is recorded is retrieved. Information of a request to transmission the distribution information is transmitted to the retrieved another information processing apparatus. Distribution information corresponding to the transmission request information is obtained as a replica of the distribution information together with the evaluation information corresponding to the distribution information. Further, when the distribution information is obtained, a value obtained by multiplying the value of the evaluation information corresponding to the distribution information with a replica factor corresponding to the obtained distribution information is stored as a new value of the corresponding evaluation information. In addition, the replica factor has a value less than 1 corresponding to distance on the network to the another information processing apparatus. Accordingly, when new distribution information is obtained as a replica, evaluation information can be properly updated in the relation with the distance on the network to the information processing apparatus as the distribution source and the obtained distribution information itself.

Further, in the case where the computer functions as the information processing apparatus according to claim 6, in addition to the case where the computer functions as the information processing apparatus according to claim 5, when a replica of the distribution information is recorded in the information processing apparatus which has received the distribution request, replica generation information indicative of the fact is transmitted together with a replica factor to the distribution source of the distribution information. Thus, the value of the evaluation information corresponding to the distribution information recorded in the information processing apparatus as the distribution source can be properly updated in the relation with the replica.

Further, in the case where the computer functions as the information processing apparatus according to claim 7, in addition to the case where the computer functions as the information processing apparatus according to claim 5 or 6, the distribution information corresponding to deletion evaluation information is designated as deletion distribution information to be deleted. When free recording space in the recording means becomes equal to or less than the information amount of the another distribution information to be received next, the distribution information designated as the deletion distribution information is actually deleted from the recording means. Thus, in relation with another distribution information to be received next, distribution information which becomes unnecessary can be deleted in proper time, and new distribution information can be efficiently received.

Further, in the case where the computer functions as the information processing apparatus according to claim 8, in addition to the case where the computer functions as the information processing apparatus according to claim 7, a check is made to see whether or not a replica of the distribution information corresponding to the deletion evaluation information exists in any of the information processing apparatuses on the network. Except for the case where it is recognized that the replica exists in any of the information processing apparatuses on the network, the distribution information corresponding to the deletion evaluation information is excluded from objects to be designated as the deletion distribution information. As a result, when the replica does not exist in any of the information processing apparatuses on the network, the distribution information corresponding to the deletion evaluation information is not deleted. Therefore, the distribution information can be prevented from disappearing from the network.

Further, in the case where the computer functions as the information processing apparatus according to claim 9, in addition to the case where the computer functions as the information processing apparatus according to claim 8, when a replica of the distribution information corresponding to the deletion evaluation information exists in any of the information processing apparatuses in a preset search range on the network, it is recognized that a replica of the distribution information corresponding to the deletion evaluation information exists in any of the information processing apparatuses on the network. Consequently, by excluding an information processing apparatus on the outside of the search range from the range in which the existence of distribution information is recognized, necessary distribution information can be retrieved promptly.

Further, in the case where the computer functions as the information processing apparatus according to claim 10, in addition to the case where the computer functions as the information processing apparatus according to any one of claims 3 and 5 to 9, it is set so that the longer the distance on the network, the larger the value of the replica factor. Consequently, generation of a distribution request from an information processing apparatus in a far place on the network can be suppressed to some extent. Distribution information which is frequently requested by the information processing apparatuses in a certain range on the network can be efficiently distributed to the information processing apparatuses in the range and recorded.

According to the invention of claim 13, in the case where an information processing program for causing a computer to function as the information processing apparatus according to claim 1 is recorded, by reading and executing the program in the computer, evaluation information having a value based on at least the number of distribution requests is stored for each piece of the distribution information. Consequently, the number of replicas of the distribution information in the network and the like can be controlled according to the evaluation information.

Therefore, by controlling the number of replicas of distribution information in a network and designation of an information processing apparatus to store the replicas on the basis of the evaluation value, replicas of the necessary number in the network can be disposed autonomously in proper positions in the network, and necessary distribution information can be distributed more efficiently.

In the case where an information processing program for causing a computer to function as the information processing apparatus according to claim 2 is recorded, by reading and executing the program in the computer, in addition to the case where the computer functions as the information processing apparatus according to claim 1, the value of the evaluation information increases each time a distribution request is made. Consequently, the actual number of distribution requests, that is, the value of the evaluation information corresponding to actual popularity of the distribution information in users of the information processing apparatuses in the network is accurately reflected. Thus, the replicas can be disposed properly in the network in accordance with the actual popularity.

Further, in the case where an information processing program for causing a computer to function as the information processing apparatus according to claim 3 is recorded, by reading and executing the program in the computer, in addition to the case where the computer functions as the information processing apparatus according to claim 1 or 2, a value obtained by multiplying the value of the evaluation information corresponding to the distributed distribution information with a replica factor transmitted from the distribution destination when a replica of the distribution information is generated in the distribution destination is set as a new value of the evaluation information corresponding to the distribution information, and the replica factor has a value less than 1 corresponding to distance on the network to the information processing apparatus as the distribution destination. Consequently, when a replica of the distributed distribution information is generated in the information processing apparatus as the distribution destination, the evaluation information can be properly updated in relation with the distance on the network to the information processing apparatus in which a replica is generated and the replica itself.

Further, in the case where an information processing program for causing a computer to function as the information processing apparatus according to claim 4 is recorded, by reading and executing the program in the computer, in addition to the case where the computer functions as the information processing apparatus according to any one of claims 1 to 3, the value of the evaluation information corresponding to each piece of distribution information decreases each time preset time elapses. Consequently, the evaluation information can be updated without making the difference between distribution information frequently requested to be distributed and the other distribution information excessive.

Further, in the case where an information processing program for causing a computer to function as the information processing apparatus according to claim 5 is recorded, by reading and executing the program in the computer, in addition to the case where the computer functions as the information processing apparatus according to any one of claims 1 to 4, when distribution information requested to be distributed is not recorded, another information processing apparatus in which the distribution information is recorded is retrieved. Information of a request to transmission the distribution information is transmitted to the retrieved another information processing apparatus. Distribution information corresponding to the transmission request information is obtained as a replica of the distribution information together with the evaluation information correspondingtothedistributioninformation. Further, when the distribution information is obtained, a value obtained by multiplying the value of the evaluation information corresponding to the distribution information with a replica factor corresponding to the obtained distribution information is stored as a new value of the corresponding evaluation information. In addition, the replica factor has a value less than 1 corresponding to distance on the network to the another information processing apparatus. Accordingly, whennew distribution information is obtained as a replica, evaluation information can be properly updated in the relation with the distance on the network to the information processing apparatus as the distribution source and the obtained distribution information itself.

Further, in the case where an information processing program for causing a computer to function as the information processing apparatus according to claim 6 is recorded, by reading and executing the program in the computer, in addition to the case where the computer functions as the information processing apparatus according to claim 5, when a replica of the distribution information is recorded in the information processing apparatus which has received the distribution request, replica generation information indicative of the fact is transmitted together with a replica factor to the distribution source of the distribution information. Thus, the value of the evaluation information corresponding to the distribution information recorded in the information processing apparatus as the distribution source can be properly updated in the relation with the replica.

Further, in the case where an information processing program for causing a computer to function as the information processing apparatus according to claim 7 is recorded, by reading and executing the program in the computer, in addition to the case where the computer functions as the information processing apparatus according to claim 5 or 6, the distribution information corresponding to deletion evaluation information is designated as deletion distribution information to be deleted. When free recording space in the recording means becomes equal to or less than the information amount of the another distribution information to be received next, the distribution information designated as the deletion distribution information is actually deleted from the recording means. Thus, in relation with another distribution information to be received next, distribution information which becomes unnecessary can be deleted in proper time, and new distribution information can be efficiently received.

Further, in the case where an information processing program for causing a computer to function as the information processing apparatus according to claim 8 is recorded, by reading and executing the program in the computer, in addition to the case where the computer functions as the information processing apparatus according to claim 7, a check is made to see whether or not a replica of the distribution information corresponding to the deletion evaluation information exists in any of the information processing apparatuses on the network. Except for the case where it is recognized that the replica exists in any of the information processing apparatuses on the network, the distribution information corresponding to the deletion evaluation information is excluded from objects to be designated as the deletion distribution information. As a result, when the replica does not exist in any of the information processing apparatuses on the network, the distribution information corresponding to the deletion evaluation information is not deleted. Therefore, the distribution information can be prevented from disappearing from the network.

Further, in the case where an information processing program for causing a computer to function as the information processing apparatus according to claim 9 is recorded, by reading and executing the program in the computer, in addition to the case where the computer functions as the information processing apparatus according to claim 8, when a replica of the distribution information corresponding to the deletion evaluation information exists in any of the information processing apparatuses in a preset search range on the network, it is recognized that a replica of the distribution information corresponding to the deletion evaluation information exists in any of the information processing apparatuses on the network. Consequently, by excluding an information processing apparatus on the outside of the search range from the range in which the existence of distribution information is recognized, necessary distribution information can be retrieved promptly.

Further, in the case where an information processing program for causing a computer to function as the information processing apparatus according to claim 10 is recorded, by reading and executing the program in the computer, in addition to the case where the computer functions as the information processing apparatus according to any one of claims 3 and 5 to 9, it is set so that the longer the distance on the network, the larger the value of the replica factor. Consequently, generation .of a distribution request from an information processing apparatus in a far place on the network can be suppressed to some extent. Distribution information which is frequently requested by the information processing apparatuses in a certain range on the network can be efficiently distributed to the information processing apparatuses in the range and recorded.

Brief Description of Drawings

FIG. 1 is a block diagram showing a schematic configuration of a node according to a first embodiment.
FIG. 2 is a flowchart showing operations in the node according to the first embodiment.

FIG. 3 is a flowchart showing evaluation value obtaining process in the node according to the first embodiment.

FIG. 4 is a flowchart showing content obtaining process in the node according to the first embodiment.

FIG. 5 is a flowchart showing replica generating process in the node according to the first embodiment.

FIGS. 6A, 6B, 6C, and 6D are diagrams illustrating first, second, third, and fourth stages, respectively, of distribution of content among nodes in the first embodiment.

FIGS. 7A, 7B, and 7C are diagrams illustrating first, second, and third stages, respectively, of another distribution of content among the nodes in the first embodiment.

FIG. 8 is a flowchart showing replica generating process in a node according to a second embodiment.

FIGS. 9A, 9B, and 9C are diagrams showing a content distribution state among nodes in the second embodiment and illustrating first, second, and third stages, respectively, of replica generating process.

Description of Reference Numerals

| | |
|----|----|
| 11 | control unit |
| 12 | recording unit |
| 13 | buffer memory |
| 14 | decoder |
| 15 | video processor |
| 16 | display unit |
| 17 | sound processor |
| 18 | speaker |
| 20 | communication unit |
| 21 | input unit |
| 22 | bus |
| N, N1, N2, N3, N4 | nodes |
| C1, C2, C3, C4 | content |

Best Mode for carrying out the Invention

Best modes for carrying out the invention will now be described with reference to the drawings. In embodiments described below, the invention is applied to the case where, according to a content distribution requesting operation executed in one of terminal devices, desired content is distributed to the terminal device from another terminal device in the P2P distribution system for distribution the content by using a network such as the Internet. In the following description, the terminal device will be generally called a "node".

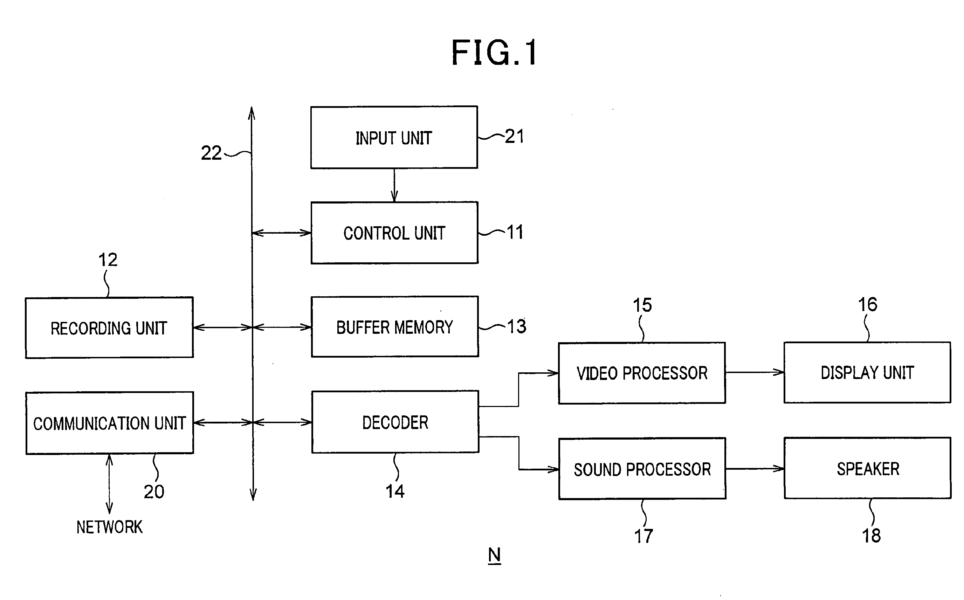

First, the schematic configuration of each of nodes connected to each other via a network in a distribution system in the embodiments will be described with reference to FIG. 1. FIG. 1 is a block diagram showing a schematic configuration of the node in the embodiment. Nodes belonging to the P2P distribution system according to the embodiment have basically the same hardware configuration. The outline of the configuration of a general node N as a representative of the nodes will be described with reference to FIG. 1.

As shown in FIG. 1, a node N included in the distribution system according to the embodiment has: a control unit 11 as evaluation information updating means, retrieving means, designating means, and recognizing means constructed by a CPU having an operating function, a RAM (Random Access Memory) for work, a ROM (Read Only Memory) for recording various data and programs, and the like; a recording unit 12 as storing means and evaluation information storing means constructed by an HDD (Hard Disc Drive) or the like for recording and storing content data as the content itself, various routing data necessary for distributing the content data, necessary programs, and the like; a buffer memory 13 for temporarily storing received content data; a decoder 14' for decoding (expanding, deciphering, or the like) encoded video data (video information), audio data (audio information), and the like included in the content data; a video processor 15 for performing a predetermined rendering process on the decoded video data and the like and outputting the resultant data as a video signal; a display unit 16 constructed by a CRT (Cathode Ray Tube), a liquid crystal display, or the like for displaying an image on the basis of the video signal output from the video processor 15; a sound processor 17 for D/A (Digital/Analog) converting the decoded audio data to an analog audio signal, amplifying the analog audio signal by an amplifier or the like, and outputting the amplified audio signal; a speaker 18 for outputting the audio signal output from the sound processor 17 as sound waves; a communication unit 20 as transmitting means, obtaining means, and replica generation information transmitting means for performing communication control on information between the communication unit 20 and another node device 1 via a network 8; and an input unit (for example, a keyboard, a mouse, an operation panel, and the like) 21 for receiving an instruction of the user and outputting an instruction signal according to the instruction to the control unit 11. The control unit 11, recording unit 12, buffer memory 13, decoder 14, and communication unit 20 are connected to each other so that data can be transmitted among them via a bus 22.

By executing various programs recorded in the recording unit 12 and the like by the CPU in the control unit 11, the control unit 11 controls the general operation of the node N in the embodiment in a centralized manner.

(I) First Embodiment of Content Distributing Operation and Replica Generating Operation

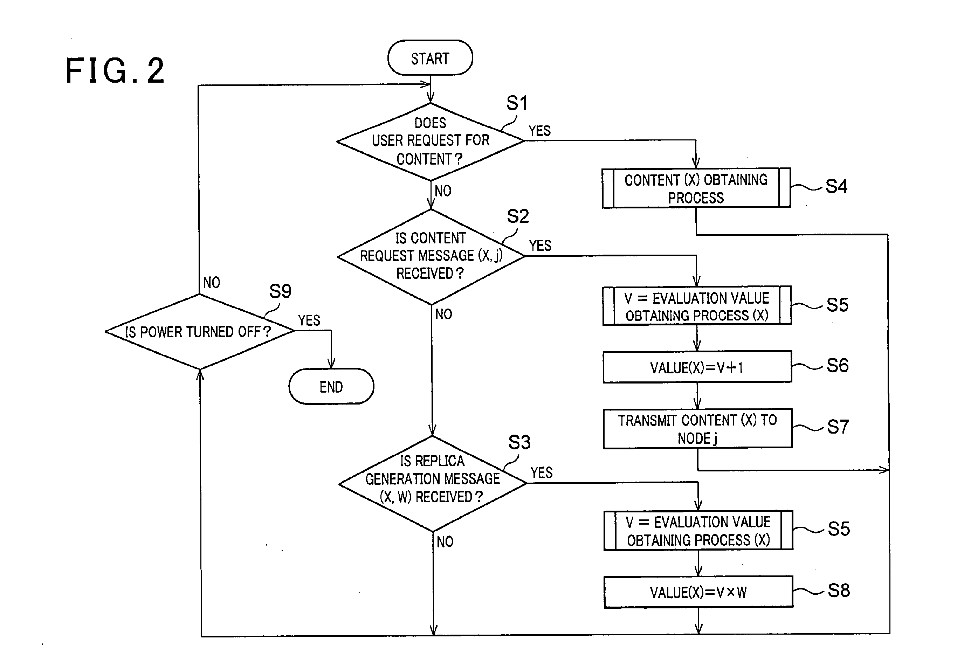

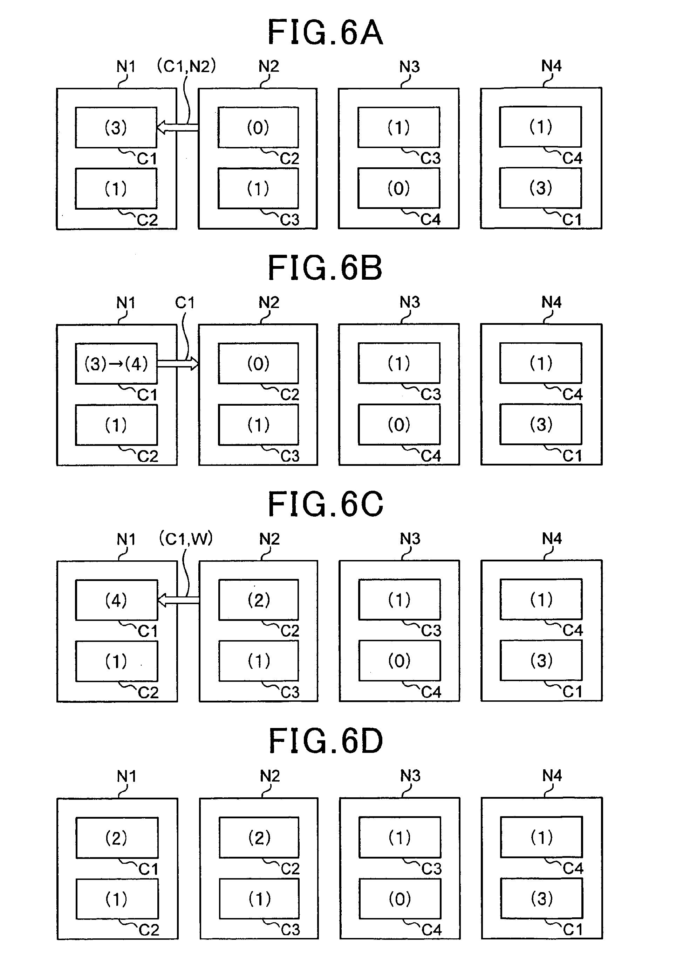

Next, the content distributing operation and the replica generating operation executed in association with the content distributing operation in the node N will be described with reference to FIGS. 2 to FIGS. 6A to 6D. FIGS. 2 to 5 are flowcharts showing the operations, and FIGS. 6A to 6D are diagrams illustrating the result of the operations.

In the following distribution system according to the embodiment, an evaluation value having a value corresponding to the number of times of requesting distribution of the content (that is, the number of times distribution of the content is requested by other nodes N) is added to each of content pieces stored in the recording unit 12 of each node N.

In the distribution system, when an operation for requesting distribution of content (hereinbelow, content requested to be distributed is called content (X)) to one node is executed in the one node (hereinbelow, the node in which the distribution requesting operation is executed will be called a node "j"), a content request message (X, j) requesting distribution of the content X to the node "j" is transmitted from the node "j" to another node storing the content X in its recording unit 12 (hereinbelow, the another node for transmitting the content (X) stored in itself to the node "j" in correspondence with the received content request message (X, j) will be called a node "k").

When the content (X) is transmitted to the node "j" and a replica of the content (X) stored in the recording unit 12 of the node "k" as a distribution source is generated in the recording unit 12 of the node "j", a replica generation message (X, W) is transmitted from the node "j" in which the replica is generated to the node "k" as the transmission source. A parameter W included in the replica generation message (X, W) is a replica factor used for adjusting an evaluation value of the content (X) in the entire distribution system of the embodiment due to the fact that the replica of the content (X) stored in the node "k" as the distribution source is generated in the node "j" as the distribution destination.

In the node "j" in which the replica is generated, the generated replica is used to execute a process of reproducing the replica (that is, the content (X)) corresponding to the distribution requesting operation.

Next, the content distributing operation and the replica generating operation in the embodiment will be concretely described with reference to FIGS. 2 to FIGS. 6A to 6D.

First, the operations will be generally described by referring to FIG. 2. In the distribution system of the embodiment, any of the nodes N can become the node "j" or the node "k". FIG. 2 shows both of the case where one node N becomes the node "j" and the case where the node N becomes the node "k".

As shown in FIG. 2, in the content distributing operation and the replica generating operation in the embodiment, first, in a node N, whether the content distribution requesting operation is executed in the node N or not is always monitored (step S1). When the distribution requesting operation is executed in the node N, that is, when the node N becomes the node "j" (Yes in step S1), a process for obtaining the requested content (X), is executed in the node "j" (step S4).

After completion of the process of obtaining the content (X), a check is made to see whether the power supply of the node "j" is turned off or not (step S9). When the power supply is turned off (Yes in step S9), the operations in the node "j" are completed. When the power supply remains off (No in step S9), the program returns to the process in the step S1 to move to the process of obtaining the next content.

On the other hand, when the content distribution requesting operation is not executed in the determination of the step S1 (No in step S1), next, whether the content request message (X, j) has been transmitted from another node N to the one node N or not is determined (step S2). In the case where the content request message (X, j) is transmitted, that is, in the case where the one node N becomes the node "k" (Yes in step S2), an evaluation value acquiring process for acquiring (calculating) an evaluation value of the content (X) currently stored in the node "k" is executed. The acquisition result is temporarily stored as the value of a parameter V indicative of the acquisition result (step S5).

Thereafter, when the content request message (X, j) is transmitted (that is:, when the operation of requesting distribution of the content (X) stored in the node "k" is executed in another node N (the node "j" at present)) in the step S2, the value of the parameter V temporarily stored is incremented only by "1", thereby obtaining an evaluation value for the current content X (the evaluation value for the content X will be referred to as VALUE(X) hereinbelow) (step S6). Thereafter, the data of the content (X) requested to be distributed from the node "j" at present is transmitted to the node "j" on which the requesting operation is performed (step S7). The routine moves to the step S9, and the above-described process is executed.

On the other hand, when it is determined in step S2 that the content request message (X, j) is not transmitted from any of the nodes N (No in step S2), next, whether or not the replica generationmessage (X, W) (after distribution of the requested content X) is transmitted from the another node N serving as the node "j " at present to the one node N serving as the node "k" at present is determined (step S3). When the replica generation message (X, W) is transmitted, that is, when a replica of the content X is generated in the current node "j" (Yes in step S3), the evaluation value acquiring process for the distributed content (X) is executed on the current evaluation value VALUE (X), and a new acquisition result is temporarily stored as the value of the parameter V (step S5).

Thereafter, a value obtained by multiplying the value of the parameter V temporarily stored in the process of the step S5 with the replica factor W included in the replica generation message (X, W) transmitted is set as the current evaluation value VALUE(X) (step S8). Subsequently, the routine advances to the step S9, and the above-described process is executed.

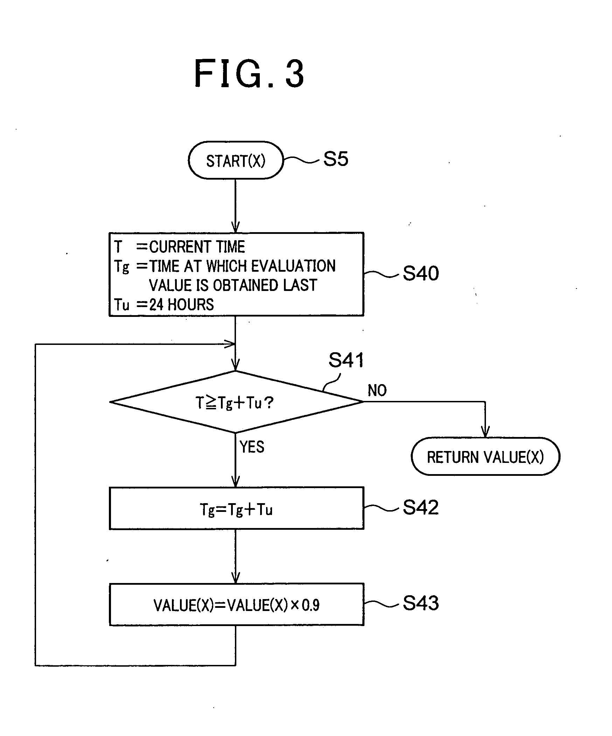

Next, the details of the process for acquiring an evaluation value of the content (X) in the step S5 will be described with reference to FIG. 3. FIG. 3 is a flowchart showing the details of the evaluation value acquiring process.

As shown in FIG. 3, in the process for acquiring the evaluation value on the content (X) in the first embodiment, first, three parameters T, Tg, and Tu related to the evaluation value acquiring process are set as "current time", "time at which the evaluation value on the content (X) is obtained last (most recently) in the node "j" by executing the process of the step S5", and "24 hours" (corresponding to "preset time" in claim 4 of the present invention), respectively (step S40). The initial value of the parameter Tg is time at which the evaluation value VALUE (X) on the content (X) is initially determined by a preset method.

After completion of setting of the parameters, a check is made to see whether the following relation is currently satisfied or not.

$$T \geq Tg + Tu$$

That is, a check is made to see whether or not the current time is time after lapse of 24 hours or more since the time the evaluation value on the content (X) is obtained last in the node "j" (step S41).

When the current time is not time after lapse of 24 hours or more since the time the evaluation value on the content (X) is obtained last in the node "j" (No in step S41), the program moves to the step S6 or S8 in FIG. 2 without changing the evaluation value on the content (X) at present.

On the other hand, when it is determined in step S41 that the current time is time after lapse of 24 hours or more since the time the evaluation value is obtained in the node "j" (Yes in step S41), the parameter Tg is updated to a value obtained by adding the parameter Tu to the original parameter Tg (that is, the value of the parameter Tg is updated by adding 24 hours) (step S42). Further, the value of the current evaluation value VALUE (X) is reduced only by 10% (step S43). Thereafter, the program returns to the step S41.

As described above, the evaluation value acquiring process shown in FIG. 3 is always executed. Consequently, each time 24 hours elapses since the evaluation value VALUE(X) is updated last (step S43), the evaluation values VALUE(X) of the content pieces decrease by 10% independently of each other. As a result, in the distribution system of the first embodiment, the evaluation values of all of the content pieces having high and low evaluation values decrease by 10% every 24 hours independently of each other. In such a manner, the evaluationvalueofcontentwhich wasfrequentlyrequested to be distributed in the past and, after that, requested less frequently can be updated without becoming much larger than the evaluation values of the other content pieces.

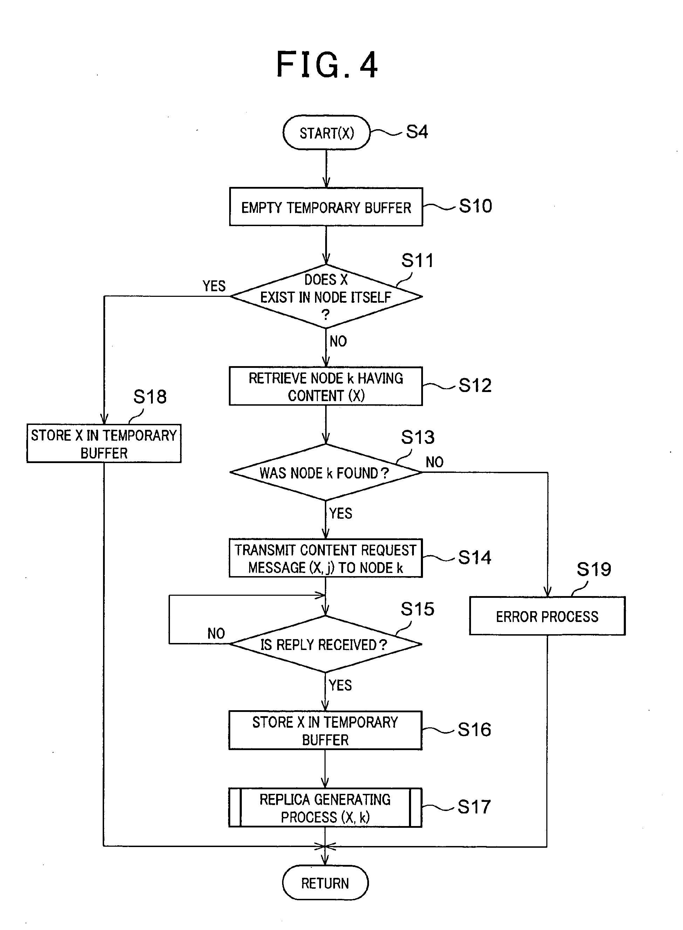

Next, the details of the content (X) acquiring process in the step S4 will be described with reference to FIG. 4. FIG. 4 is a flowchart showing the details of the acquiring process.

As shown in FIG. 4, in the process of acquiring the content (X) in the first embodiment, first, a temporary buffer memory (that is, an area in the recording unit 12 temporarily storing the content (X) for reproduction) formed in the recording unit 12 in the node "j" on which the content (X) acquisition requesting operation is executed is initialized (step S10). Next, whether the desired content (X) is already stored in, for example, a nonvolatile area in the recording unit 12 or not is determined (step S11). When the content (X) is already stored in the nonvolatile area (Yes in step S11), it is unnecessary to newly receive the content (X) distributed from another node N. Consequently, the stored content (X) is stored into the temporary buffer memory (step S18) which has been initialized (step S10). Then, the program moves to the step S9 shown in FIG. 2.

On the other hand, when it is determined in the step S11 that the content (X) is not stored in the recording unit 12 of the node "j" (No in step S11), another node N (that is, the node "k") having the recording unit 12 in which the content (X) is stored is retrieved in the distribution system according to the first embodiment (steps S12 and S13). As a concrete method of the retrieval, it is suitable to employ a retrieval method using so-called DHT (Distributed Hash. Table) in the case of the P2P distribution system.

When another node N to become the node "k" cannot be found (No in step S13), the desired content (X) cannot be obtained in the distribution system of the first embodiment. Consequently, the fact is notified to the user by using the display unit 16 or the like in the node "j" (step S 19), and the program moves to the step S9 shown in FIG. 2.

On the other hand, when it is determined in the step S13 that another node N to become the node "k" can be found (Yes in step S13), next, the content request message (X, j) is transmitted from the node "j" to the node "k" (step S14), and the program waits for distribution of the data itself of the content (X) as a reply to the content request message (X, j) (No in step S15). When the data of the content (X) is distributed from the node "k" (Yes in step S15), the distributed content (X) is temporarily stored in the temporary buffer of the node "j" (step S16) and, thereafter, used for a reproducing process in the node "j". After completion of the reproduction process, the content (X) in the temporary buffer is deleted as necessary.

To generate a replica of content which can be provided to another node separately from the content in the temporary buffer, a replica generating process (X, k) to be described later is executed (step S17), and the program moves to the step S9 in FIG. 2.

When the process of the step S12 or S15 is executed, in parallel with the process, the number of not-shown routers (hereinbelow, the number will be called the number of hops) between the retrieved node "k" and the node "j" to which the content (X) is distributed is temporarily stored in the recording unit 12. Via the routers, the content (X) is distributed. The number of hops can be recognized by, for example, in the Internet, specifying the value of a TTL (Time To Live) field in an IP packet in advance, and detecting decrease in the value on reception of the IP packet.

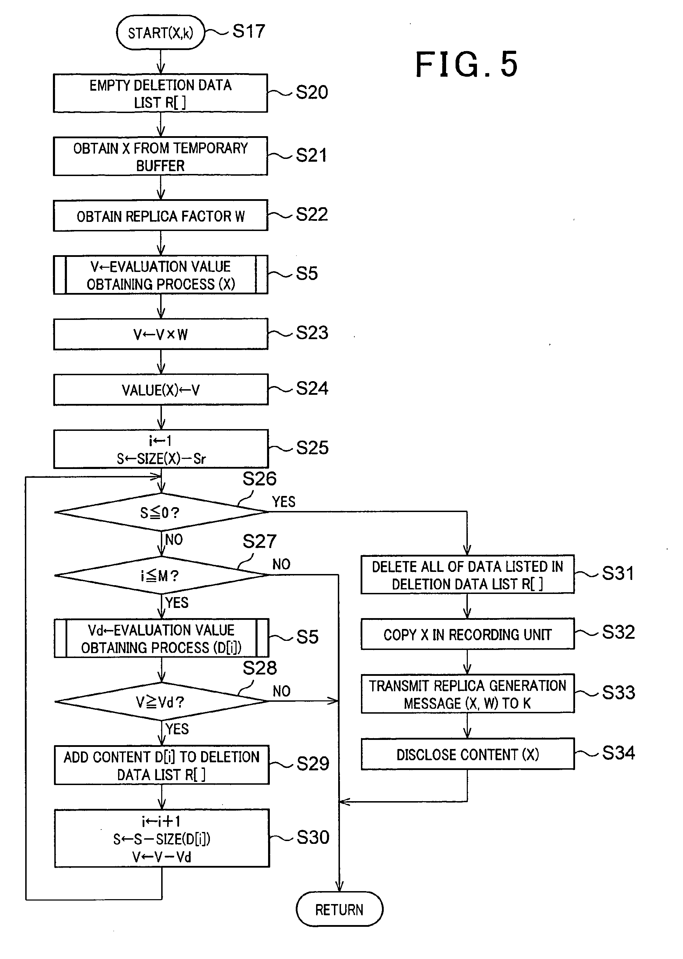

Finally, the details of the replica generating process (X, k) in the step S17 will be described by using FIG. 5. FIG. 5 is a flowchart showing the details of the replica generating process.

In the flowchart of FIG. 5, a parameter M is a parameter indicative of the number of pieces of content stored in the recording unit 12 in the node "j". A parameter D[i], (parameter i = 1, 2, 3, ..., M) is a parameter indicative of content which is stored in the recording unit 12 and whose evaluation value VALUE (X) is the i-th smallest value. A parameter Sr is a parameter indicative of an information amount (hereinbelow, called an unrecorded-area information amount) in an area in which content is not recorded (simply called an unrecorded area) of the content storing area in the recording unit 12. A parameter SIZE(X) is a parameter indicative of an information amount of digital data of the content (X).

As shown in FIG. 5, in the replica generating process (X, k) executed in the node "j" in the first embodiment, first, a deletion data list R[ ] indicative of a list of content to be deleted in the content stored in the recording unit 12 in the node "j" is initialized (step S20). Next, the content (X) stored in the temporary buffer is read (step S21) and, further, the replica factor W corresponding to the content (X) is set (step S22).

The larger the number of hops temporarily stored in the step S12 or S15 in FIG. 4 is, that is, the further, when viewed from the node "j", the node "k" from which the content (X) is sent is, the larger the value of the replica factor W is set. More specifically, for example, when the number of hops is less than 10, the replica factor W is set as "0.5". When the number of hops is 10 or larger, the replica factor W is set as "0.8". The reason why the larger the number of hops, the larger the replica factor W will be described in detail later.

After the replica factor W is set in the step S22, the evaluation value acquiring process is executed on the current evaluation value VALUE(X), and a new acquisition result is temporarily stored as the value of the parameter V (step S5). A value obtained by multiplying the temporarily stored parameter V with the replica factor W is set as a new parameter V (step S23) and, further, the latest parameter V is set as the evaluation value VALUE(X) at that ,time (step S24).

Next, the parameter "i" is initialized to "1", and the parameter S indicating how insufficient the value of the current parameter Sr for recording the content (X) (that is, whether the content (X) can be recorded in the unrecorded area in the recording unit 12 or not) is calculated as follows (step S25).

$$S = SIZE(X) - Sr$$

Whether the parameter S is equal to or less than "0" or not, that is, whether the unrecorded-area information amount is larger than the information amount of the content (X) or not is determined (S26). When the parameter S is "0" or less and the unrecorded-area information amount becomes larger than the information amount of the content (X) (Yes in step S26), all of the content (as will be described later, content determined as content which can be deleted from the recording unit 12 due to its low evaluation value) written in the data list R[ ] is deleted (step S31). Further, the content (X) stored in the temporary buffer is stored into a vacant area (see step S31) of the content storage area in the recording unit 12 (step S32). Further, the replica generation message (X, W) including the replica factor W obtained at that time (see step S22) is transmitted to the node "k" which has distributed the content (X) (step S33). Generation of a new replica of the content (X) in the recording unit 12 in the node "j" is disclosed by using a technique similar to the conventional one (step S34), and the program moves to the step S9 in FIG. 2 (via the step S17 in FIG. 4).

On the other hand, when it is determined in step S26 that the parameter S is not "0" or less and the unrecorded-area information amount is insufficient to record the content (X) (No in step S26), a check is made to see whether the value of the parameter "i" has incremented to the value "M" or not (step S27).

When the value of the parameter "i" is the value "M" or less (Yes in step S27), the evaluation value acquiring process is executed on the current evaluation value VALUE(D[i]) corresponding to the content D[i] indicated by the parameter D[i], and a new acquisition result is temporarily stored as the value of the parameter Vd (step S5).

Next, whether the value of the parameter Vd temporarily stored is equal to or less than the value of the current parameter V (see step S23) is determined (step S28). When the value of the parameter Vd is equal to or less than the value of the current parameter V (Yes in step S28), it is determined that the content D[i] may be deleted from the recording unit 12 since its evaluation value VALUE(D[i]) (= Vd) is low, and the content D[i] is added to the delete data list R[ ] (step S29).

The parameter "i" is incremented only by "1", and the parameter S is updated to a value obtained by subtracting the value of the parameter SIZE(D[i]) from the current value (that is, increase in the unrecorded area only by the amount of the content D[i] by deleting the content D[i] in future (see step S31) is expressed) . Further, the value of the current parameter V is decreased only by the value of the parameter Vd (that is, the criterion for retrieving content of a lower evaluation value in the recording unit 12 is lowered) (step S30). The program returns to the step S26 and the above-described processes are repeated.

On the other hand, when it is determined in the step S28 that the value of the parameter Vd is larger than the current value of the parameter V (No in step S28), it is determined that the content (D[i]) corresponding to the current parameter Vd is not to be deleted due to its high evaluation value, and the program moves to the step S9 in FIG. 2 (via the step S17 in FIG. 4).

When it is determined in the step S27 that the value of the current parameter "i" is larger than the value "M", determination is made that there is no content to be deleted, and the program similarly moves to the step S9 in FIG. 2 (via the step S17 in FIG. 4).

The reason why the larger the number of hops, the larger the replica factor W in the relation between the number of hops and the value of the replica factor W will be described.

Generally, to operate the network system efficiently as a whole, desirably, traffic (transmission, of data) is not concentrated but is generally uniformly dispersed. On the other hand, a general network has locality in so-called topology. The communication among nodes which are apart from each other on the network has the cost higher than that of communication among nodes which are closer to each other, and causes concentration of traffic. That is, when communication is performed among nodes disposed as close as possible (that is, closed communication in a narrow area), the efficiency of use of the network as a whole is higher. From such a viewpoint, a distribution request from the node N which is far on the network (that is, the number of hops is large) is unpreferable for the distribution system including a network in a specific area, so that the number of the requests should be reduced as much as possible. However, on the other hand, when a distribution request is sent from a far node, it can be said that another node N storing the desired content does not exist around the node N from which the distribution request is transmitted. Consequently, like in the first embodiment, the value of the replica factor W for a distribution request from a far node is set to be large ("0.8" in the first embodiment). After the content is distributed once, generating a replica which is not easily deleted in the node as the distribution destination makes it possible to reduce the possibility that the distribution request is sent again from nodes in the far area.

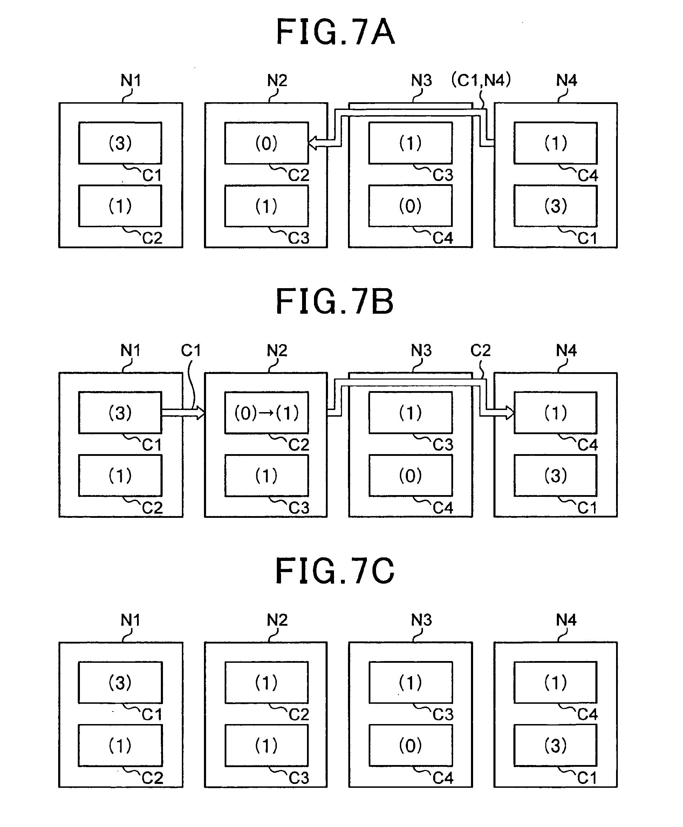

Next, transmission/reception of content among nodes N existing in the distribution system and how a change in the evaluation value on each content progresses in association with the transmission/reception when the processes shown in FIGS. 2 to 5 are executed will be described concretely with reference to FIGS. 6A to 6D and FIGS. 7A to 7C.

In the example to be described with reference to FIGS. 6A to 6D and FIGS. 7A to 7C, four nodes N1 to N4 exist in the distribution system as nodes N for storing content (that is, nodes N to become the nodes "k"). The number of pieces of content which can be stored in one node N is two, and the replica factor W is set as "0.5". In the following example, each time one content request message is transmitted to one node N, the corresponding evaluation value is incremented only by "1" (see the step S6 in FIG. 2). When one replica is generated in the node "j" (see step S32 in FIG. 5), the evaluation value is multiplied with the replica factor W (= 0.5) so that the evaluation value becomes the half (see step S8 in FIG. 2).

That is, in the case of FIGS. 6A to 6D, at present, content C1 whose evaluation value is "3" and content C2 whose evaluation value is "1" are stored, as shown in FIG. 6A, in the recording unit 12 of each of the four nodes N1 to N4 as the nodes "k" in the distribution system of the first embodiment. In the recording unit 12 of the node N2, content C2 whose evaluation value is "0" and content C3 whose evaluation value is "1" are stored. In the recording unit 12 of the node N3, content C3 whose evaluation value is "1" and content C4 whose evaluation value is "0" are stored. In the recording unit 12 of the node N4, content C4 whose evaluation value is "1" and content C1 whose evaluation value is "3" are stored. In the P2P distribution system of the first embodiment, the numbers of pieces of each of the content C1 to C4 in the distribution system are the same.

Next, in the state of FIG. 6A, for example, when any of nodes in the node N2 requests for transmission of the content C1 (Yes in the step S1 in FIG. 2), first, the node N2 obtains, for example, the node N1 (Yes in the step S13 in FIG. 4) storing the desired content C1, and transmits the content request message (C1, N2) for requesting transmission of the content C1 to the node N1 (see step S14 in FIG. 4).

As shown in FIG. 6B, the node N1 having received the content request message (C1, N2) increments the evaluation value of the content C1 stored by itself only by "1" to thereby set "4" (see step S6 in FIG. 2), and transmits the content C1 to the node N2 (see step S7 in FIG. 2).

Consequently, the node N2 receives the transmitted content C as shown in FIG. 6C, and obtains a new evaluation value (= 2) of the content C calculated by multiplying the evaluation value of the content C1 with the replica factor W (= 0.5) at that time (see steps S22 and S23 in FIG. 5).

Since the evaluation value (= 0) of the content C2, which is the lowest among those of the content stored in the recording unit 12 of the node N2, is "2" or less (Yes in step S28 in FIG. 5), the node N2 deletes the content C2 (see steps S29 and S31 in FIG. 5) and generates a new replica of the content C1 (see step S32 in FIG. 5).

After completion of generation of the replica, the node N2 generates a replica generation message (C1, W) indicative of the completion and transmits it to the node N1 as the supply source, of the content C1 as shown in FIG. 6C (see step S33 in FIG. 5).

When the node N1 receives the replica generation message (C1, W) (Yes in step S3 in FIG. 2), the node N1 multiplies the current evaluation value (= 4) of the content C1 with the transmitted replica factor W (= 0.5), and stores the resultant (= 2) as a new evaluation value on the content C1 (see step S8 in FIG. 2).

By the above-described series of operations, as shown in FIG. 6D, the evaluation values of the content C become finally balanced again in the distribution system.

Another concrete example of the first embodiment will be described with reference to FIGS. 7A to 7C.

As shown in FIG. 7A, in a state similar to that shown in FIG. 6A, the node N4 requests transmission of the content C2 from any of the nodes (Yes in step S1 in FIG. 2). At this time, the node N4 finds, for example, the node N2 storing the desired content C2 (Yes in step S13 in FIG. 4) and transmits the content request message (C2, C4) requesting transmission of the content C2 to the node N2 (see step S14 in FIG. 4).

Next, as shown in FIG. 7B, the node N2 having received the content request message (C2, N4) increments the evaluation value of the content C2 stored in itself only by "1" to thereby set (1) (step S6 in FIG. 2) . Thereafter, the content C2 is transmitted to the node N4 (see step S7 in FIG. 2).

The node N4 receives the transmitted content C2 as shown in FIG. 7C and obtains the evaluation value (= 0.5) of new content C2 calculated by multiplying the evaluation value of the content C2 with the replica factor W (= 0.5) at that time (see steps S22 and S23 in FIG. 5).

Since the evaluation value (= 1) of the content C4 having the lowest evaluation value among the content stored in the storing part 12 of the node N4 itself is not 0.5 or less (No in step S28 in FIG. 5), the process is finished without generating a replica of the received content C2.

As described above, by the operations of the distribution system according to the first embodiment, at least the evaluation values based on the number of distribution requests with respect to the content are stored. Accordingly, the number of replicas of the content in the distribution system and the like can be controlled in accordance with the evaluation values.

Therefore, by controlling the number of replicas in the distribution system and designation of the node N to store the replicas on the basis of the evaluation value, replicas of the necessary number in the distribution system can be disposed autonomously in proper positions in the network, and necessary content can be distributed more efficiently.

Since the evaluation value increases each time a distribution request is made, the actual number of distribution requests, that is, the evaluation value corresponding to actual popularity of content among the users of the nodes N in the distribution system is accurately reflected. Replicas of the number according to actual popularity can be properly disposed in the distribution system.

Further, a value obtained by multiplying an evaluation value on distributed content with a replica factor transmitted from a distribution destination when a replica of the content is generated in the distribution destination is used as a new evaluation value on the content, and the replica factor has the value less than 1 corresponding to the distance on the network to the node N at the distribution destination (that is, the number of hops). Consequently, when a replica of the content distributed to the node N as the destination is generated, the evaluation value can be properly updated in relation to the distance on the network to the node N where the replica is generated and the replica itself.

In addition, since the evaluation value on content decreases every preset time lapse, the evaluation value can be updated without making the difference between content frequently requested to be distributed and the other content excessive.

When content requested to be distributed is not recorded, another node N storing the content is retrieved. A content request message is transmitted to the retrieved another node N, content corresponding to the content request message is obtained as a replica of the content together with the corresponding evaluation value. When the content is obtained, a value obtained by multiplying the evaluation value corresponding to content with the replica factor corresponding to the obtained content is stored as a corresponding new evaluation value. In addition, the replica factor has a value less than 1 corresponding to the distance on the network to another node N. Accordingly, when new content is obtained as a replica, the evaluation value can be properly updated in relation to the distance on the network to the node N as the distribution source and the obtained content itself.

Further, when a replica of the content is recorded in the node N which has received a distribution request, a replica generation message indicative of the fact is transmitted together with the replica factor to the distributor of the content. Therefore, the evaluation value corresponding to the content recorded in the node N as the distributor can be properly updated in relation to the replica.

When content is designated as content to be deleted in accordance with an evaluation value and the vacant recording capacity in the recording unit 12 becomes equal to or less than the information amount of another content to be received next, the content designated as content to be deleted is actually deleted from the recording unit 12. Consequently, content which becomes unnecessary can be deleted at proper timing in relation to another content to be received, and new content can be received efficiently.

Since it is set so that the longer the distance on the network, the larger the value of a replica factor, generation of a distribution request from a node N in a far place on the network can be prevented to some extent. Content having large number of distribution requests by the nodes N in a certain range on the network can be efficiently distributed among the nodes N in the range and recorded.

(II) Second Embodiment of Content Distributing Operation and Replica Generating Operation

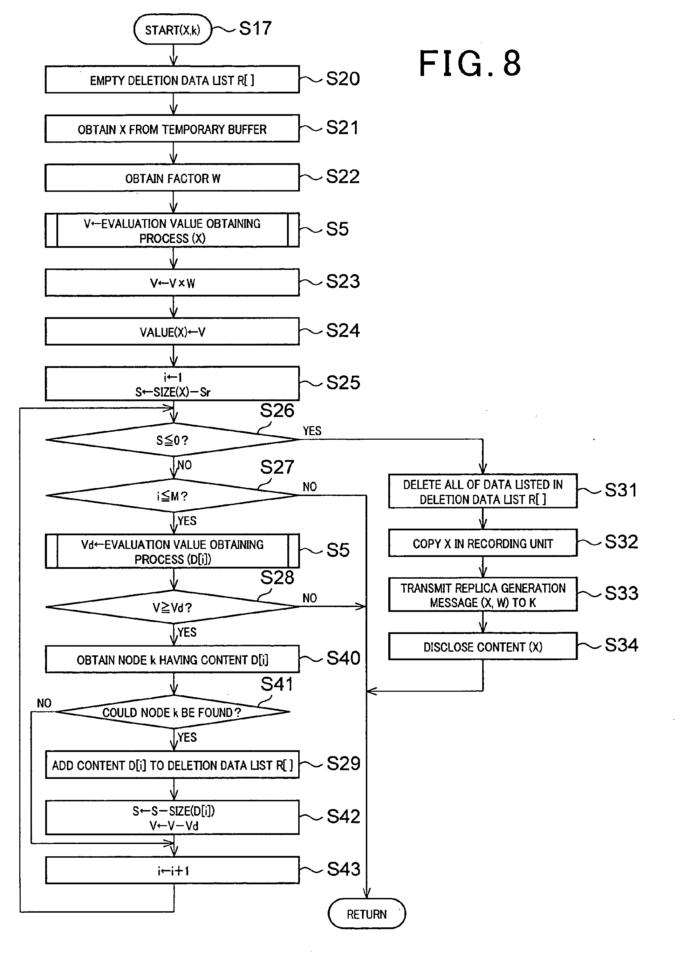

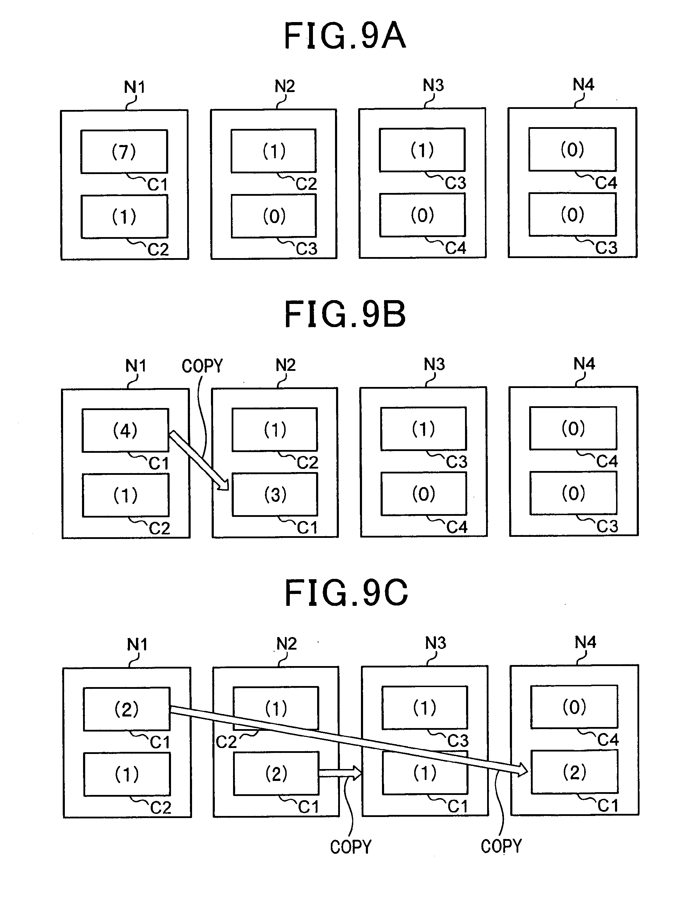

A second embodiment as another embodiment of the invention will be described with reference to FIG. 8 and FIGS. 9A to 9C. FIG. 8 is a flowchart showing replica generating process of the second embodiment, and FIGS. 9A to 9C are diagrams showing the result of the replica generating process.

In the foregoing first embodiment, content whose evaluation value becomes lower than a threshold (parameter V) at that time is deleted from all of nodes N storing the content (see step S31 in FIG. 5). In the second embodiment described below, content whose replica does not exist in another node N in the distribution system is not deleted irrespective of its evaluation value.

Since the operation in the distribution system according to the second embodiment, is the same as that in the distribution system according to the first embodiment except for a replica generating process (step S17) shown in FIG. 8, the detailed description will not be given. Further, in the replica generating process shown in FIG. 8, the same step numbers are designated to the same processes as those of the replica generating process of the first embodiment shown in FIG. 5, and the detailed description will not be given.

As shown in FIG. 8, in the replica generating process (X, k) executed in the node "j" of the second embodiment, first, steps S20 to S22, step S5, steps S23 to S28, and steps S31 to 34 similar to those in the replica generating process (X, k) of the first embodiment are executed.

When it is determined in step S28 that the value of the parameter Vd is equal to or less than the value of the current parameter V (Yes in step S28), another node N (that is, node "k") having the recording unit 12 in which the content D[i] is recorded is searched for in the distribution system of the second embodiment (steps S40 and S41) .

In determination of whether the another node N can be found or not by the search (step S41), in the case where another node N as a target cannot be found even when the search range is widened to the preset number of hops on the network, it is determined as "No" (in step S41) .

When it is determined in step S41 that the node "k" storing the target content (D[i]) can be found (Yes in step S41), since the evaluation value VALUE (D[i]) (= Vd) of the content is low, it is determined that the content D[i] may be deleted from the recording unit 12 in the node "j", and the content D[i] is added to the delete data list R[ ] (step S29).

The parameter S is updated to a value obtained by subtracting the value of the parameter SIZE (D[i]) from the current value (that is, increase in the unrecorded area only by the amount of the content D [i] by deleting the content D [i] in future (see step S31) is expressed). Further, the value of the current parameter V is decreased only by the value of the parameter Vd (that is, the criterion for retrieving content of a lower evaluation value in the recording unit 12 is lowered) (step S42) and the parameter "i" is incremented only by "1" (step S43). Thereafter, the program returns to the process of the step S26 and the above-described processes are repeated.

On the other hand, when it is determined in the step S41 that the node "k" storing the target content (D[i]) cannot be found (No in step S41), the content (D[i]) does not exist in any of the nodes N in the distribution system. Therefore, when the content (D[i]) is deleted also from the current node "j", the content (D[i]) does not exist anymore in the distribution system and cannot be distributed after that. Consequently, without adding the content (D[i]) to the delete data list R [ ], the program moves directly to the step S43 without executing the steps S29 and S43.

Next, transmission/reception of content among nodes N existing in the distribution system and how a change in the evaluation value of content accompanying the transmission/reception of content progresses when operations of the second embodiment including the replica generating process shown in FIG. 8 will be concretely described with reference to FIGS. 9A to 9C by using the case shown in FIGS. 6A to 6D.

It is assumed that the evaluation values on contents C1 to C4 in nodes N1 to N4 are as shown in the parentheses in FIG. 9A. With respect to distribution requesters for the nodes N1 to N4 shown in FIGS. 9A to 9C, it is assumed that the distribution requester of one of distribution requests to the content C1 in the node N1 is the node N1 (since the content C1 is not stored in the node N2 at present), the distribution requester of another one of distribution requests to the content C1 in the node N1 is the node N4 (since the content C1 is not stored also in the node N4 at present), and a request for distributing the content C1 which is not stored in the node N2 is sent from the node N3 as the distribution requester.

The replica generating process (see step S17 in FIG. 4) and the evaluation value adjusting process (see step S8 in FIG. 2) of the second embodiment are finished under the above conditions. Thereafter, as a first stage, as shown in FIG. 9B, the content C3 in the node N2 is deleted from the node N2 since its evaluation value is "0". Instead, a replica of the content C1 in the node N1 is generated in the node N2 (see step S32 in FIG. 9) and, further, the evaluation value of the content C1 in the node N1 and the evaluation value of (the replica of) the new content C1 in the node N2 are set to "4" and "3", respectively (see step S8 in FIG. 2 and step S17 in FIG. 4) .

As shown in FIG. 9C as a second stage, the content C3 in the node N4 is deleted since its evaluation value is "0". Instead, a replica, of the content C1 in the node N1 is generated in the node N4 (see step S32 in FIG. 9) and, further, the evaluation value of the content C1 in the node N1 and the evaluation value of (the replica of) the new content C1 in the node N4 are set to "2" (see step S8 in FIG. 2 and step S17 in FIG. 4). Similarly, the evaluation value of the content C4 in the node N3 is deleted since its evaluation value is "0" (for the reason that, even when the content C4 in the node N3 is deleted, the content C4 still remains in the node N4 in the distribution system of the second embodiment, so that deletion of the content C4 in the node N3 is permitted (Yes in step S41 in FIG. 8)). Instead, a replica of the content C1 in the node N2 is generated in the node N3 (see step S32 in FIG. 9) . Further, the evaluation value of the content C1 in the node N2 and the evaluation value of (the replica of) the new content C1 in the node N3 are set to "2" and "1", respectively (see step S8 in FIG. 2 and step S17 in FIG. 4). As shown in FIG. 9C, the evaluation values of the content C are balanced again in the distribution system.

As described above, by the replica generating process (X, k) in the second embodiment, the effects of the operation of the distribution system according to the first embodiment are produced. In addition, except for the case where existence of a replica of content to be deleted in any of the nodes N in the distribution system is recognized, the content to be deleted is excluded from objects to be deleted. As a result, when the replica does not exist in any of the nodes N in the distribution system, the content is not deleted from the recording unit 12 even if the content is to be deleted (No in step S41 in FIG. 10). Thus, the content can be prevented from being disappeared from the distribution system.

When a replica of content to be deleted exists in any of the nodes N in the search range on the preset network, it is recognized that a replica of contents to be deleted exists in any of the nodes N in the distribution system. Consequently, by excluding the node N on the outside of the search range from the range in which the existence of content is recognized, generation of a distribution request to the node N in a far place on the network can be suppressed to some extent. Thus, content frequently requested to be distributed by the nodes N in a certain range on the network can be efficiently distributed among the nodes N in the certain range and recorded.

The value of the replica factor W may be determined on the basis of, except for the number of hops, for example, the number of replicas in the distribution system. The value may be experimentally obtained by calculating an average value of the number of hops or the number of replicas in a content distribution state.

Another configuration is also possible. A program corresponding to the flowcharts of FIGS. 2 to 5 and 10 is recorded on an information recording medium such as a flexible disk or hard disk. Alternately, a program is obtained via the Internet or the like and recorded. By reading and executing the program by a general computer, the computer can be made function as the control unit 11 in the embodiment.

Industrial Applicability

As described above, the present invention can be used for the field of distribution of content via a network. Particularly, when the invention is applied to the field of distribution of content in a downloading manner, conspicuous effects are obtained.

**Claims**

1. An information processing apparatus as a component of an information distribution system in which distribution information to be distributed is directly transmitted/received among information processing apparatuses via a network, comprising:

   recording means for recording one or plural pieces of the distribution information; and
   evaluation information storing means for generating and storing evaluation information having a value based on at least the number of distribution requests for each piece of the distribution information.

2. The information processing apparatus according to claim 1,
further comprising evaluation information updating means for, each time distribution of any of the distribution information recorded in the recording means is requested by another one of the information processing apparatuses on the network, increasing the value of the evaluation information corresponding to the requested distribution information.

3. The information processing apparatus according to claim 1 or 2,
wherein in the case where any piece of the distribution information recorded in the recording means is transmitted to the another information processing apparatus in correspondence with transmission request information from the another information processing apparatus on the network, when replica generation information indicating that a replica of the transmitted distribution information is generated in the another information processing apparatus is transmitted from the another information processing apparatus together with a replica factor corresponding to the distribution information whose replica has been generated, the evaluation information storing means stores, as a new value of the evaluation information corresponding to the distributed distribution information, a value obtained by multiplying the value of the evaluation information corresponding to the distribution information at the time point when the distribution information is distributed to the another information processing apparatus with the transmitted replica factor, and
the replica factor has a value less than 1 corresponding to distance on the network between the information processing apparatus having the evaluation information storing means and the another information processing apparatus which has transmitted the replica generation information.

4. The information processing apparatus according to any one of claims 1 to 3,
further comprising evaluation information updating means for decreasing the value of each piece of the evaluation information each time preset time elapses.

5. The information processing apparatus according to any one of claims 1 to 4, further comprising:

retrieving means for, when the distribution information requested to be distributed is not recorded in the recording means, retrieving another information processing apparatus having the recording means in which the distribution information as an object of the distribution request is recorded on the network;
transmitting means for transmitting transmission request information indicative of a request to the retrieved another information processing apparatus to transfer the distribution information; and
obtaining means for obtaining the distribution information corresponding to the transmission request information as a replica of the distribution information from the retrieved another information processing apparatus together with the evaluation information corresponding to the distribution information,

wherein, when the distribution information is obtained from the retrieved another information processing apparatus, the evaluation information storing means stores, as a new value of the evaluation information corresponding to the distributed distribution information, a value obtained by multiplying the value of the evaluation information obtained together with the distribution information with a replica factor corresponding to the obtained distribution information, and
the replica factor has a value less than 1 corresponding to distance on the network between the retrieved another information processing apparatus and the information processing apparatus having the evaluation information storing means.

6. The information processing apparatus according to claim 5,
further comprising replica generation information transmitting means for, when the distribution information obtained from the retrieved another information processing apparatus is recorded as a replica in the recording means, transmitting replica generation information indicating that the distribution information is recorded as a replica in the recording means together with the replica factor corresponding to the recorded distribution information to the retrieved another information processing apparatus.

7. The information processing apparatus according to claim 5 or 6,
further comprising designating means for designating, as deletion distribution information to be deleted from the recording means, the distribution information corresponding to deletion evaluation information as the evaluation information having a value smaller than the stored new value,

wherein, when free recording space in the recording means becomes equal to or less than the information amount of the another distribution information to be received next, the distribution information designated as the deletion distribution information is deleted from the recording means.

8. The information processing apparatus according to claim 7,
wherein the designating means comprises recognizing means for recognizing whether or not a replica of the distribution information corresponding to the deletion evaluation information exists in any of the information processing apparatuses on the network, and
except for the case where it is recognized that the replica exists in any of the information processing apparatuses on the network, the distribution information corresponding to the deletion evaluation information is excluded from objects to be designated as the deletion distribution information.

9. The information processing apparatus according to claim 8,
wherein, when a replica of the distribution information corresponding to the deletion evaluation information exists in any of the information processing apparatuses in a preset search range on the network, including the information processing apparatus, the recognizing means recognizes that a replica of the distribution information corresponding to the deletion evaluation information exists in any of the information processing apparatuses on the network.

10. The information processing apparatus according to any one of claims 3 and 5 to 9,
wherein it is preset so that the longer the distance, the larger the value of the replica factor.

11. An information processing method executed in an information processing apparatus as a component of an information distribution system in which distribution information to be distributed is directly transmitted/received among information processing apparatuses via a network, the information processing apparatus including recording means and evaluation information storing means,
the method comprising:

a recording step for recording one or plural pieces of the distribution information in the recording means; and
an evaluation information storing step for generating evaluation information having a value based on at least the number of distribution requests for each piece of the distribution information and storing the evaluation information into the evaluation information storing means.

12. An information processing program for causing a computer to function as the information processing apparatus according to any one of claims 1 to 10.

13. A recording medium in which the information processing program according to claim 12 is recorded so as to be readable by the computer.

# FIG.1

INPUT UNIT ~21

CONTROL UNIT ~11

22~

12

RECORDING UNIT

BUFFER MEMORY ~13

COMMUNICATION UNIT

20

NETWORK

DECODER

14

15

VIDEO PROCESSOR

16

DISPLAY UNIT

SOUND PROCESSOR

17

SPEAKER

18

N

EP 1 868 104 A1

# FIG. 2

START

S1 DOES USER REQUEST FOR CONTENT?
— YES → CONTENT (X) OBTAINING PROCESS — S4
— NO ↓

S2 IS CONTENT REQUEST MESSAGE (X, j) RECEIVED?
— YES → V = EVALUATION VALUE OBTAINING PROCESS (X) — S5
→ VALUE(X)=V+1 — S6
→ TRANSMIT CONTENT (X) TO NODE j — S7
— NO ↓

S3 IS REPLICA GENERATION MESSAGE (X, W) RECEIVED?
— YES → V = EVALUATION VALUE OBTAINING PROCESS (X) — S5
→ VALUE(X)=V×W — S8
— NO ↓

S9 IS POWER TURNED OFF?
— YES → END
— NO → (return to START)

# FIG. 3

START(X) —S5

T  =CURRENT TIME
Tg =TIME AT WHICH EVALUATION
        VALUE IS OBTAINED LAST —S40
Tu =24 HOURS

$T \geqq Tg+Tu$ ? —S41

NO

YES

RETURN VALUE(X)

$Tg=Tg+Tu$ —S42

$VALUE(X)=VALUE(X) \times 0.9$ —S43

# FIG. 4

START(X) — S4

EMPTY TEMPORARY BUFFER — S10

S11
DOES X EXIST IN NODE ITSELF ?

YES → STORE X IN TEMPORARY BUFFER — S18

NO

RETRIEVE NODE k HAVING CONTENT (X) — S12

S13
WAS NODE k FOUND ? — NO → ERROR PROCESS — S19

YES

TRANSMIT CONTENT REQUEST MESSAGE (X, j) TO NODE k — S14

S15
IS REPLY RECEIVED ?

NO

YES

STORE X IN TEMPORARY BUFFER — S16

REPLICA GENERATING PROCESS (X, k) — S17

RETURN

27

# FIG. 5

START(X,k) — S17

EMPTY DELETION DATA LIST R[ ] — S20

OBTAIN X FROM TEMPORARY BUFFER — S21

OBTAIN REPLICA FACTOR W — S22

V←EVALUATION VALUE OBTAINING PROCESS (X) — S5

V←V×W — S23

VALUE(X)←V — S24

i←1
S←SIZE(X)−Sr — S25

S26
S≦0？ — YES

NO

S27
i≦M？ — NO

YES

Vd←EVALUATION VALUE OBTAINING PROCESS (D[i]) — S5

S28
V≧Vd？ — NO

YES

ADD CONTENT D[i] TO DELETION DATA LIST R[ ] — S29

i←i+1
S←S−SIZE(D[i])
V←V−Vd — S30

DELETE ALL OF DATA LISTED IN DELETION DATA LIST R[ ] — S31

COPY X IN RECORDING UNIT — S32

TRANSMIT REPLICA GENERATION MESSAGE (X, W) TO K — S33

DISCLOSE CONTENT (X) — S34

RETURN

# FIG.6A

N1 (C1,N2) N2 N3 N4

(3) C1
(1) C2

(0) C2
(1) C3

(1) C3
(0) C4

(1) C4
(3) C1

# FIG.6B

N1 C1 N2 N3 N4

(3)→(4) C1
(1) C2

(0) C2
(1) C3

(1) C3
(0) C4

(1) C4
(3) C1

# FIG.6C

N1 (C1,W) N2 N3 N4

(4) C1
(1) C2

(2) C2
(1) C3

(1) C3
(0) C4

(1) C4
(3) C1

# FIG.6D

N1 N2 N3 N4

(2) C1
(1) C2

(2) C2
(1) C3

(1) C3
(0) C4

(1) C4
(3) C1

# FIG.7A

N1  N2  N3  (C1,N4)  N4

| (3) C1 | (0) C2 | (1) C3 | (1) C4 |
| (1) C2 | (1) C3 | (0) C4 | (3) C1 |

# FIG.7B

N1  C1  N2  N3  C2  N4

| (3) C1 | (0)→(1) C2 | (1) C3 | (1) C4 |
| (1) C2 | (1) C3 | (0) C4 | (3) C1 |

# FIG.7C

N1  N2  N3  N4

| (3) C1 | (1) C2 | (1) C3 | (1) C4 |
| (1) C2 | (1) C3 | (0) C4 | (3) C1 |

# FIG.8

START(X,k) — S17

EMPTY DELETION DATA LIST R[ ] — S20

OBTAIN X FROM TEMPORARY BUFFER — S21

OBTAIN FACTOR W — S22

V←EVALUATION VALUE OBTAINING PROCESS (X) — S5

V←V×W — S23

VALUE(X)←V — S24

i←1
S←SIZE(X)−Sr — S25

S26
S≦0? — YES → DELETE ALL OF DATA LISTED IN DELETION DATA LIST R[ ] — S31

NO

S27
i≦M? — NO

YES

Vd←EVALUATION VALUE OBTAINING PROCESS (D[i]) — S5

S28
V≧Vd? — NO

YES

OBTAIN NODE k HAVING CONTENT D[i] — S40

S41
COULD NODE k BE FOUND? — NO

YES

ADD CONTENT D[i] TO DELETION DATA LIST R[ ] — S29

S←S−SIZE(D[i])
V←V−Vd — S42

i←i+1 — S43

COPY X IN RECORDING UNIT — S32

TRANSMIT REPLICA GENERATION MESSAGE (X, W) TO K — S33

DISCLOSE CONTENT (X) — S34

RETURN

# FIG.9A

| N1 | N2 | N3 | N4 |
|---|---|---|---|
| (7) C1 | (1) C2 | (1) C3 | (0) C4 |
| (1) C2 | (0) C3 | (0) C4 | (0) C3 |

# FIG.9B

N1 — COPY → N2

| N1 | N2 | N3 | N4 |
|---|---|---|---|
| (4) C1 | (1) C2 | (1) C3 | (0) C4 |
| (1) C2 | (3) C1 | (0) C4 | (0) C3 |

# FIG.9C

| N1 | N2 | N3 | N4 |
|---|---|---|---|
| (2) C1 | (1) C2 | (1) C3 | (0) C4 |
| (1) C2 | (2) C1 | (1) C1 | (2) C1 |

COPY    COPY

| **INTERNATIONAL SEARCH REPORT** | International application No. |
|---|---|
| | PCT/JP2005/020876 |

| A. CLASSIFICATION OF SUBJECT MATTER |
|---|
| *G06F13/00*(2006.01) |
| According to International Patent Classification (IPC) or to both national classification and IPC |

| B. FIELDS SEARCHED |
|---|
| Minimum documentation searched (classification system followed by classification symbols) |
| *G06F13/00*(2006.01) |

| Documentation searched other than minimum documentation to the extent that such documents are included in the fields searched |
|---|
| Jitsuyo Shinan Koho          1922-1996   Jitsuyo Shinan Toroku Koho    1996-2006 |
| Kokai Jitsuyo Shinan Koho    1971-2006   Toroku Jitsuyo Shinan Koho    1994-2006 |

| Electronic data base consulted during the international search (name of data base and, where practicable, search terms used) |
|---|
| |

| C. DOCUMENTS CONSIDERED TO BE RELEVANT |||
|---|---|---|
| Category* | Citation of document, with indication, where appropriate, of the relevant passages | Relevant to claim No. |
| X | JP 2003-280975 A  (Kanazawa Institute of Technology), 03 October, 2003 (03.10.03), Par. Nos. [0008] to [0022] (Family: none) | 1-2,11-13 |
| Y | WO 2002/082339 A1  (Koichi WATANABE), 17 October, 2002 (17.10.02), Claim 14 (Family: none) | 4 |
| Y | WO 2003/005654 A1  (Koninklijke Philips Electronics N.V.), 16 January, 2003 (16.01.03), Full text & EP 1415446 A1 | 4 |

| ☒  Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 January, 2006 (16.01.06) | 31 January, 2006 (31.01.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2005/020876 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-220183 A  (Sony Corp.),<br>05 August, 2004 (05.08.04),<br>Full text; all drawings<br>(Family: none) | 3,5 |
| A | JP 2005-4615 A  (Oki Electric Industry Co.,<br>Ltd.),<br>06 January, 2005 (06.01.05),<br>Full text; all drawings<br>(Family: none) | 3,5 |

Form PCT/ISA/210 (continuation of second sheet) (April 2005)

**EP 1 868 104 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003099337 A